(19) Europäisches Patentamt
European Patent Office
Office européen des brevets

(11) EP 3 584 863 A1

(12) EUROPEAN PATENT APPLICATION

(43) Date of publication:
25.12.2019 Bulletin 2019/52

(51) Int Cl.:
*H01M 6/18* (2006.01) *B01D 71/66* (2006.01)

(21) Application number: 18305782.7

(22) Date of filing: 20.06.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **CENTRE NATIONAL DE LA RECHERCHE SCIENTIFIQUE**
  **75016 Paris (FR)**
- **Karlsruhe Institute of Technology (KIT)**
  **76131 Karlsruhe (DE)**
- **Forschungszentrum Jülich GmbH**
  **52425 Jülich (DE)**

(72) Inventors:
- **Iojoiu, Cristina**
  **38210 Vourey (FR)**
- **Nguyen, Huu-Dat**
  **3800 Grenoble (FR)**
- **Paillard, Elie**
  **48161 Munster (DE)**
- **Shi, Junli**
  **48151 Munster (DE)**
- **Bresser, Dominic**
  **89073 Ulm (DE)**
- **Kim, Guk-Tae**
  **89075 Ulm (DE)**

(74) Representative: **Lavoix**
**2, place d'Estienne d'Orves**
**75441 Paris Cedex 09 (FR)**

# (54) POLYMER ELECTROLYTE COMPRISING AT LEAST ONE ORGANIC SOLVENT AND AT LEAST ONE AROMATIC IONOMER AND USES THEREOF

(57) The present invention relates to a polymer electrolyte comprising at least one organic solvent and at least one aromatic ionomer,
wherein:
- the organic solvent is a plasticizing solvent with a boiling point higher than 100°C and an electrochemical stability window of at least 2 V,
- the aromatic ionomer comprises alternating ionic and nonionic segments; said aromatic ionomer comprising:
• at least nonionic aromatic repeating units UAr1, and
• at least one ionic repeating unit UI1 of formula (I).

EP 3 584 863 A1

## Description

The present invention concerns a polymer electrolyte comprising at least one organic solvent and at least one aromatic ionomer, as well as methods for preparing said electrolyte. The present invention also concerns the preparation of electrodes with said electrolytes as well as the use of said polymer electrolyte, in particular in batteries, such as lithium batteries.

Electrochemical energy-storage devices such as lithium batteries have become essential constituents in portable devices such as cell phones, computers and light power tools, or heavier devices such as two-wheel transportation means (bicycles, mopeds) or four-wheel transportation means (electrical or hybrid motor vehicles). They are also widely studied for use in the field of stationary energy storage.

The various constituents of an electrochemical device (e.g. electrode and/or electrolyte materials) are chosen so as to produce, at the lowest possible cost, devices that have high energy density, good cycling stability and which operate with safety.

Efficient, safe, and environmentally-friendly energy storage is a key requirement to successfully transitioning from depleting fossil fuels to renewable energy sources. In this regard, lithium-based batteries are playing a decisive role, particularly in meeting the demands of a highly mobile society. Nevertheless, the commonly employed liquid organic electrolytes are highly flammable and release toxic degradation products. Solid electrolytes are a promising alternative, since they offer an improved safety and potentially suppress dendritic lithium deposition, which can cause short circuits and consequently a thermal runaway of the cell. Among them, due to their flexibility and modularity, solid polymer electrolytes (SPEs) are excellent candidates. For their commercial implementation, however, one must simultaneously ensure acceptable ionic conductivity (>$10^{-4}$ S $cm^{-1}$ at 25 °C), high mechanical strength, and an electrochemical stability window of at least 4-5 V. Conventional polymer electrolytes based on poly(ethylene oxide) (PEO) consist of a lithium salt dissolved in the polymer. Frequently, also a plasticizer is added to enhance the segmental relaxation-dependent charge transport by lowering the glass transition temperature ($T_g$). The simplest approach to achieve single-ion conductivity is to covalently tether the anion to the polymer backbone (so-called 'ionomers'), thus ensuring that the only mobile species is the cation. Nevertheless, the conductivity of these systems is typically very low and despite the ten-fold increase achieved through optimizing the ionomer structure by introducing weakly coordinating anionic species or designing block or grafted copolymers, their employment remains unfeasible (Hallinan, D. T. & Balsara, N. P. Polymer Electrolytes. Annu. Rev. Mater. Res. 43, 503-525 (2013)).

The greatest challenges towards the worldwide success of battery-powered electric vehicles revolve around the safety and energy density of the battery. Single-ion conducting polymer electrolytes address both challenges by replacing the flammable and unstable liquid electrolytes and enabling dendrite-free cycling of high-energy lithium metal anodes. To date, however, their commercial use has been inhibited by insufficient ionic conductivities at ambient temperature and their limited electrochemical stability towards oxidation.

The aim of the present invention is thus to provide a polymer electrolyte enabling dendrite-free cycling of high-energy lithium metal anodes and having also a sufficient ionic conductivity at ambient temperature, as well as an improved electrochemical stability towards oxidation.

Another aim of the present invention is to provide a polymer electrolyte with a high conductivity as well as a high stability even at high potential.

Another aim of the present invention is to provide a polymer electrolyte with an excellent thermal stability and ionic conductivities of almost $10^{-3}$ S.$cm^{-1}$ at room temperature, and presenting highly reversible lithium cycling for more than 1,000 h.

Another aim of the present invention is to provide a polymer electrolyte with an excellent electrochemical stability allowing for highly stable cycling of $Li[Ni_{1/3}Co_{1/3}Mn_{1/3}]O_2$ as high-energy cathode material, thus, paving the way for advanced lithium metal batteries.

Therefore, the present invention relates to a polymer electrolyte comprising at least one organic solvent and at least one aromatic ionomer,
wherein:

- the organic solvent is a plasticizing solvent with a boiling point higher than 100°C and an electrochemical stability window of at least 2 V,
- the aromatic ionomer comprises alternating ionic and nonionic segments; said aromatic ionomer comprising:
    - at least nonionic aromatic repeating units UAr1, and
    - at least one ionic repeating unit UI1 having the following formula (I):

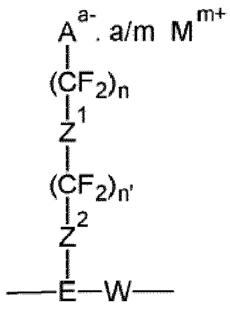

(I)

wherein:

- M is an alkali metal cation, an alkaline-earth metal cation, a transition metal cation, or an ammonium cation with a valency m, with $1 \leq m \leq 3$, m being an integer, or aluminum,
- $A^{a-}$ is an anion chosen from a sulfonate anion, a sulfonimide anion of formula $-SO_2-N^--SO_2R$, an anion derived from a sulfonimide anion bearing at least two negative charges, and a carbanion of formula $-SO_2-C^-R'R''$, with $1 \leq a \leq 3$, a being an integer,

  ∗ R representing:

  - a fluorine atom;
  - an optionally fluoro or perfluoro alkyl group, containing from 1 to 8, preferably from 1 to 4 carbon atoms;
  - an optionally fluoro or perfluoro alkoxy group, containing from 1 to 8, preferably from 1 to 4 carbon atoms;
  - a thiocyanate group (-SCN);
  - a phenyl group optionally substituted with an electron-withdrawing group X;
  - a nitrile group;
  - a group $-NR^1$ being chosen from a saturated heterocycle containing from 3 to 6 carbon atoms and an unsaturated heterocycle containing from 4 to 6 carbon atoms;
  - a dicyanamide group $-N(CN)_2$;
  - a tricyanomethyl group $-C(CN)_3$;

  *with R' and R" being chosen, independently of each other, from the following monovalent groups:

  - a fluorine atom;
  - a thiocyanate group;
  - a nitrile group;
  - a nitro group;
  - a sulfoxide group of formula $-SOR^2$ in which $R^2$ is optionally a fluoro or perfluoro alkyl group, containing from 1 to 5 carbon atoms or an optionally fluoro or perfluoro dialkyl ether group, containing from 1 to 5 carbon atoms;
  - a sulfonyl group of formula $-SO_2R^3$ in which $R^3$ is a fluorine atom, a thiocyanate group, a nitrile group, an optionally fluoro or perfluoro alkoxy group, containing from 1 to 5 carbon atoms, an optionally fluoro or perfluoro alkyl group, containing from 1 to 5 carbon atoms or an optionally fluoro or perfluoro dialkyl ether group, containing from 1 to 5 carbon atoms;
  - a carboxylic ester group of formula $-COOR^4$, in which $R^4$ is an alkyl group containing from 1 to 5 carbon atoms;
  - an optionally substituted phenyl group; or
  - an optionally substituted phenoxy group;

  *with R' and R" being divalent groups such that the resulting carbanion radical -C-R'R" forms an aromatic ring comprising from 5 to 6 carbon atoms and optionally one or more heteroatoms O or N, said aromatic ring being optionally substituted with one or more nitrile groups;

- W is an oxygen atom, a sulfur atom or a -NR"'- group, R'" being H or a $(C_1-C_3)$alkyl group;

- $1 \leq n \leq 4$, n being an integer,
- $1 \leq n' \leq 2$, n' being an integer,
- $Z^1$ is chosen from a single bond, an oxygen atom, a sulfur atom, a group -S(=O)-, a group -S((=O)$_2$)- and a phenyl group optionally substituted in the ortho position relative to one of the functions $(CF_2)_n$ or $(CF_2)_{n'}$,
- $Z^2$ is chosen from a single bond, an oxygen atom, a sulfur atom, a group -S(=O)-, a group -S((=O)$_2$)- and a group -C(=O)-, and
- E is an aromatic group comprising from 5 to 20 carbon atoms; E comprising 1 or 2 aromatic rings.

***Organic solvent***

The polymer electrolyte of the invention comprises at least one organic solvent. It may comprise one organic solvent or a mixture of different organic solvents.

According to the invention, the organic solvent is a plasticizing solvent with a boiling point higher than 100°C and an electrochemical stability window of at least 3 V.

Preferably, the boiling point of the organic solvent is higher than 150°C, and in particular higher than 200°C.

Preferably, the electrochemical stability window of the organic solvent is of at least 3V, and in particular of at least 4V.

According to the invention, the electrochemical stability window is the voltage range between which the substance is neither continuously oxidized nor continuously reduced. It is calculated by subtracting the reduction potential (cathodic limit) from the oxidation potential (anodic limit).

According to an embodiment, the organic solvent is chosen from the group consisting of: ethylene carbonate (EC), propylene carbonate (PC), fluoroethylene carbonate (FEC), difluoroethylene carbonate ($F_2EC$), fluoropropylene carbonate, glymes, dinitriles, sulfones (linear and cyclic), sulfides, sulfites, vinylene carbonate (VC), propane sultone, propene sultone, adiponitrile, dimethylsulfoxide (DMSO) and mixtures thereof.

Preferably, the organic solvent is chosen from the group consisting of: ethylene carbonate, propylene carbonate, adiponitrile, and mixtures thereof.

According to an embodiment, in the polymer electrolyte of the invention, the weight amount of organic solvent(s) is comprised between 10% and 75%, preferably between 30% and 70%, and more preferably between 45% and 65%, in relation to the total weight of said electrolyte.

***Aromatic ionomer***

As mentioned above, the polymer electrolyte of the invention comprises one aromatic ionomer as defined above, or several different aromatic ionomers as defined above.

The aromatic ionomers of the invention are characterized in that they comprise alternating ionic and nonionic segments, wherein the ionic segment is compatible with the organic solvent (plasticizer) while the nonionic segment is not compatible with the organic solvent.

The aromatic ionomers according to the invention are highly conductive copolymers, PEO-free SICs. They are designed copolymers with a multiblock architecture, which comprise alternatingly ionic and high $T_g$ blocks.

The ionic blocks are functionalized with facilely dissociating ionic groups, in particular perfluorinated sulfonimide, while the high Tg blocks were designed to be completely non miscible with the ionic block and the organic solvent. The self-assembly of these macromolecules into well-ordered nanostructures promotes efficient charge transport and single-ion conductivities close to commercially macroporous separator imbibed with liquid electrolytes. These multi-block polymers also exhibit excellent thermal characteristics and highly reversible lithium cycling in symmetric Li|Li cells such as Li|Li[$Ni_{1/3}Co_{1/3}Mn_{1/3}$]$O_2$ full-cells, making them suitable for the next generation of safer, high-performance lithium batteries.

In the present invention, the expression "alkyl group" means a linear, branched or cyclic alkyl group (i.e. constituted of carbon and hydrogen atoms), and preferably a linear alkyl group.

In the present invention, the expression "alkoxy group" means a linear, branched or cyclic alkoxy group, and preferably a linear alkoxy group.

In the present invention, the expression "dialkyl ether group" means a dialkyl ether group in which the two alkyl groups are chosen, independently of each other, from linear, branched and cyclic alkyl groups, and are preferably two linear alkyl groups.

The optionally fluoro or perfluoro alkyl group R preferably contains 1 to 8, preferably 1 to 5, carbon atoms. According to the invention, R may thus be an alkyl group or a fluoro alkyl group or a perfluoro alkyl group.

According to one embodiment of the invention, the optionally fluoro or perfluoro alkyl group R is a linear alkyl group, chosen especially from:

- a linear alkyl group containing from 1 to 5 carbon atoms, and preferably containing from 1 to 3 carbon atoms, such as $-CH_3$ or $-C_2H_5$,
- a perfluoro linear alkyl group containing from 1 to 8 carbon atoms, and preferably containing from 1 to 4 carbon atoms, such as $-CF_3$, $-C_2F_5$ or $-C_4F_9$, and
- a fluoro linear alkyl group of formula $-CH_2-C_uF_{2u+1}$, in which $1 \leq u \leq 5$, and preferably u = 1 or 2, such as $-CH_2CF_3$.

Preferably, R is $-CF_3$.

In formula (I), the electron-withdrawing group X may be a nitrile group (-CN), a $-CF_3$ group or a nitro group ($-NO_2$).

A saturated heterocycle $-NR^1$ containing from 3 to 6 atoms, mentioned herein, may be made of aziridine, azetidine, pyrrolidine or piperidine. An unsaturated heterocycle $-NR^1$ containing from 4 to 6 atoms, mentioned herein, may be made of pyrrolidone, pyrrole, imidazole, pyrazole, triazole, tetrazole, succinimide or maleimide.

The group $R^2$ is preferably an optionally perfluoro linear alkyl group, such as $-CF_3$ or $-C_2F_5$.

The group $R^3$ is preferably an optionally perfluoro linear alkyl group, such as $-CF_3$ or $-C_2F_5$; or a perfluoro linear dialkyl ether group such as $-CF_2OCF_3$, $-CF_2OC_2F_5$, $-C_2F_4OC_2F_5$ or $-C_2F_4OCF_3$; or a linear alkoxy group such as $-OCH_3$ or $-OC_2H_5$.

According to a particularly preferred embodiment of the invention, the anion $A^{a-}$ is a sulfonate or a sulfonimide (i.e. with a = 1), and more preferably a sulfonimide.

Specifically, the monomers in which $A^{a-}$ is a sulfonimide lead to ionomers whose stability towards oxidation and whose ionic conductivity are improved.

In formula (I), the aromatic group E may comprise non-aromatic components (known as "functional" components) present on one or more of the aromatic rings or making it possible to attach several aromatic rings together. These non-aromatic components may be alkyl, alkenyl, alkynyl, haloalkyl, conjugated dienyl, alcohol, ether, carboxylic acid, ketone, ester, amide, amine, nitro, etc. groups.

For example, the benzophenone group is a $C_{13}$ aromatic group E (i.e. comprising 13 carbon atoms) comprising two aromatic rings (i.e. two phenyl groups) and one non-aromatic component (i.e. ketone group); the benzyl group is a $C_7$ aromatic group E (i.e. comprising 7 carbon atoms) comprising one aromatic ring (i.e. a phenyl group) and one non-aromatic component (i.e. a methylene group).

In the present invention, the aromatic group E may comprise heteroatoms such as one or more nitrogen, sulfur or oxygen atoms, or may be constituted solely of carbon and hydrogen atoms.

In the present invention, the term "aromatic ring" means a cyclic structure containing [4r'+2] delocalized electrons, with r' = 1.

Preferably, the aromatic group E comprises at least one aromatic ring which is a phenyl group, a thienyl group, a pyridyl group, a furyl group, or a pyrazolyl group, and preferably a phenyl group.

The aromatic rings of the aromatic group E may be chosen, independently of each other, from a phenyl group, a thienyl group, a pyridyl group, a furyl group and a pyrazolyl group.

E preferably comprises one or two aromatic rings.

The aromatic ring(s) of the aromatic group E are preferably phenyl groups.

When E comprises two aromatic rings, it may be an azulenyl group, a benzophenone group, a diphenyl group, a diphenyl sulfide group, a diphenyl sulfone group or a naphthyl group, and preferably a benzophenone group, a diphenyl sulfide group or a diphenyl sulfone group.

Preferably, E is an aromatic group which generates little steric hindrance, i.e. it does not comprise any carbon tri-substituted with aromatic rings such as a triphenylmethyl group (trityl group).

In a preferred embodiment of the invention, E is chosen from a phenyl group, a benzophenone group, a diphenyl sulfide group and a diphenyl sulfone group.

In formula (I), the transition metal M may be a transition metal from period 4 or 5 of the Periodic Table of the Elements, in particular a transition metal chosen from iron, copper, zinc, cobalt, nickel and silver.

The iron may be trivalent or divalent (m = 3 or 2); the copper, zinc, cobalt and nickel are divalent (m = 2) and the silver is monovalent (m = 1).

In formula (I), M may be aluminum. Aluminum is trivalent (m = 3).

M is preferably an alkali metal cation, such as $Li^+$, $Na^+$ or $K^+$ (m = 1) or an alkaline-earth metal cation, such as $Mg^{2+}$ or $Ca^{2+}$, and more preferably an alkali metal cation, such as $Li^+$ or $Na^+$.

As ammonium cation, M may be $NH_4^+$ or a compound of formula $+NR^5R^{5'}R^{5''}R^{5'''}$ or $+NHR^5R^{5'}R^{5''}$ in which $R^5$, $R^{5'}$, $R^{5''}$ and $R^{5'''}$ are identical or different alkyl groups, containing from 1 to 4 carbon atoms.

The ionomers bearing ammonium cations $+NHR^5R^{5'}R^{5''}$ may be advantageously impregnated with ionic liquids.

According to an embodiment, $Z^1$ is an oxygen atom and $Z^2$ is a sulfur atom or a single bond.

According to a particularly preferred embodiment of the invention, one or more of the following conditions apply to the ionic repeating unit of formula (I) of the invention:

* n = n' = 2,
* $Z^1$ is an oxygen atom,
* $Z^2$ is a sulfur atom or a single bond.

According to an embodiment, the aromatic ionomer comprises at least one ionic repeating unit UI1 having the formula (I) as defined above, wherein $A^-$ is a sulfonimide anion of formula $-SO_2-N^--SO_2R$, R being as defined above.
Preferably, the aromatic ionomer comprises at least one ionic repeating unit UI1 having the formula (I) as defined above, wherein $A^-$ is a sulfonimide anion of formula $-SO_2-N^--SO_2CF_3$.
Preferably, in formula (I) as defined above, n = n' = 2.
Preferably, in formula (I) as defined above, $Z^1$ is an oxygen atom.
Preferably, in formula (I) as defined above, $Z^2$ is a single bond
Preferably, in formula (I) as defined above, E is a phenyl group.
Preferably, in formula (I) as defined above, W is an oxygen atom.
According to a preferred embodiment, the aromatic ionomer comprises at least one ionic repeating unit UI1 having the formula (I) as defined above, wherein:

- $A^-$ is a sulfonimide anion of formula $-SO_2-N^--SO_2CF_3$;
- n = n' = 2;
- $Z^1$ is an oxygen atom;
- $Z^2$ is a single bond;
- E is a phenyl group; and
- W is an oxygen atom.

According to the invention, the units UI1 may also be represented by the following formula:

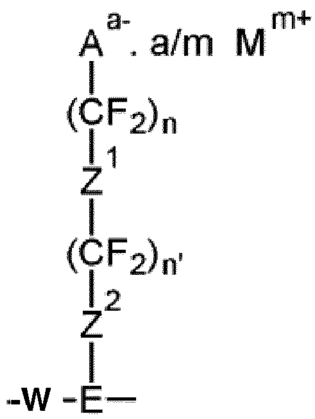

According to a preferred embodiment, units UI1 have the following formula:

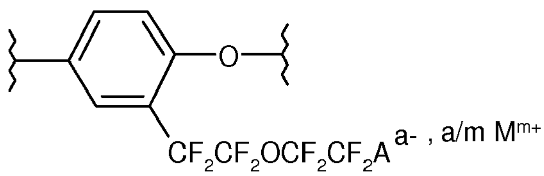

wherein $A^{a-}$, a, m and M are as defined above.
Preferably, units UI1 have the following formula:

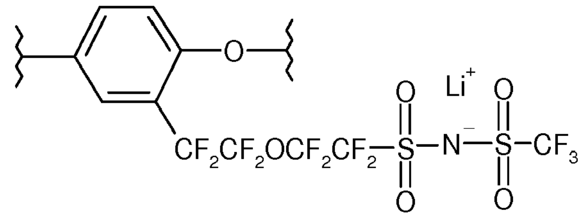

According to an embodiment, units UI1 have the formula (I) as defined above wherein $A^{a-}$ is a sulfonate anion.

The nonionic aromatic repeating units UAr1 may have the following formula (II):

$$-E_1-W-,$$

wherein $E_1$ is an aromatic group comprising from 5 to 50 carbon atoms, preferably from 5 to 20 carbon atoms, and more preferably from 5 to 15 carbon atoms, and most preferably from 5 to 10 carbon atoms, it being understood that $E_1$ comprises at least one aromatic ring and W is as defined above.

The aromatic group $E_1$ may comprise non-aromatic components (known as "functional" components) present on one or more of the aromatic rings or allowing several aromatic rings to be connected together. These non-aromatic components may be alkyl, alkenyl, alkynyl, haloalkyl, conjugated dienyl, alcohol, ether, carboxylic acid, ketone, ester, amide, amine, nitro, nitrile etc. groups.

The aromatic group $E_1$ may comprise heteroatoms such as one or more nitrogen, sulfur or oxygen atoms, or may be constituted solely of carbon and hydrogen atoms.

The term "aromatic ring" is as defined above in the present application. According to a preferred embodiment, $E_1$ is a phenyl group.

According to a preferred embodiment, the aromatic ionomer of the invention is a block copolymer comprising one or several blocks UI1-UAr1. It may also comprise one or several blocks UAr2, UAr2 having the same definition as UAr1, and being identical to or different from UAr1, and/or one or several blocks UI2-UAr2, UI2 having the same definition as UI1, and being identical to or different from UI1. It may also comprise one or several blocks UI1-UI2 and/or one or several blocks UAr1-UAr2.

The ionomer of the invention preferably has an average molar mass Mw (mass-average molar mass) ranging from 20 000 g/mol to 300 000 g/mol, more preferably from 40 000 g/mol to 150 000 g/mol, and most preferably from 70 000 g/mol to 150 000 g/mol approximately.

According to a preferred embodiment, in the polymer electrolyte of the invention, the aromatic ionomer is a multi-block copolymer of the following formula:

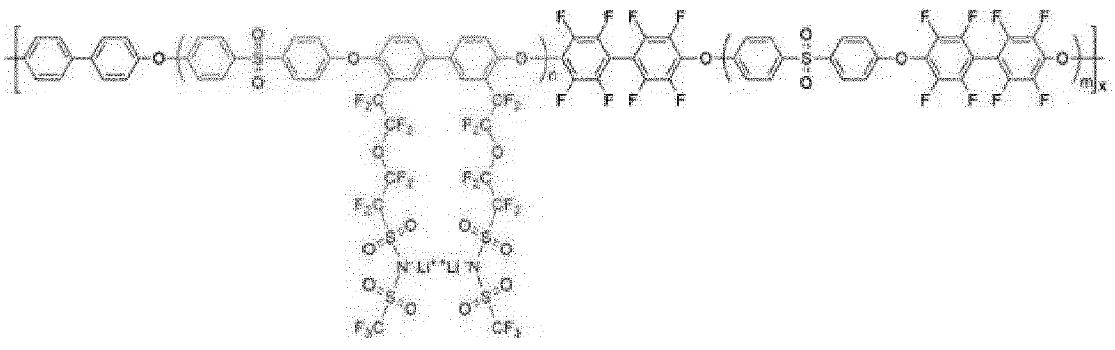

wherein:

- n is comprised between 8 and 50, preferably between 10 and 40, and more preferably between 30 and 40, most preferably between 35 and 40;
- m is comprised between 4 and 50, preferably between 10 and 30, and more preferably between 10 and 20; and
- x is comprised between 2 and 12, preferably between 4 and 12, and more preferably between 8 and 12.

Preferably, the aromatic ionomer of the invention comprises between 1 and 6, preferably between 2 and 4, ionic functions per repeating units UI1 as defined above, said units being identical or different.

The present invention also relates to a method for the preparation of the polymer electrolyte as defined above,

comprising the following steps:

- the preparation of a dry ionomer film using a solvent-cast method, and
- the doping of said dry film with at least one organic solvent, in particular by immersing said dry film in at least one organic solvent.

Preferably, in this method, the dry ionomer film is obtained by a method comprising the following steps:

- preparation of a ionomer solution by mixing at least one ionomer in a casting solvent, said casting solvent being a block-copolymer selective solvent selected from the group consisting of: dimethylformamide, dimethylsulfoxide, N-methyl-pyrrolidone, sulfolane, ethylene carbonate, propylene carbonate, and mixtures thereof, preferably DMSO, or a non-selective solvent selected from the group consisting of: dimethylacetamide, acetone, diethylacetamine, mixture of acetone and chloroform, and mixtures thereof, preferably dimethylacetamide, and
- centrifugation and casting of said ionomer solution, and removal of the casting solvent.

The present invention also relates to a method for the preparation of the polymer electrolyte as defined above, comprising the drying of the ionomer under vacuum and the preparation of said electrolyte in a dry room, preferably with a relative humidity of less than 0.2% at 20°C, under vacuum.

In another embodiment, the polymer powder and the solvent are mixed and let to homogenize (at RT-120°C), preferentially 80°C and then pressed (preferentially at 80°C into membranes.

Alternatively, the method for the preparation of the polymer electrolyte may comprise extrusion or hot pressing, including the potential subsequent doping with an organic solvent as described earlier.

***Electrode***

The present invention also relates to an electrode made of an active material selected from the group consisting of: metal oxides, metal fluorides, metal sulfides, metal nitrides, metal sulfates, metal vanadates, metal silicates and mixtures thereof, said metal comprising at least one transition metal and potentially an alkali or earth alkali metal, serving as the charge carrier, wherein said electrode also comprises the polymer electrolyte as defined above.

Preferably, the above electrode is porous. The porosity of said electrode is in particular comprised between 15% and 70%, preferably between 25% and 55%, and more preferably between 30% and 45%.

According to an embodiment, the polymer electrode is present at the surface and/or in the pores of the electrode.

The electrode of the invention may also comprise sulfur, lithium sulfide, sodium sulfide, phosphorus, carbon, graphite, silicon, germanium tin, zinc, aluminum, or any other element and element combinations that can reversibly alloy with the cationic charge carrier, including the corresponding oxides, nitrides, fluorides, phosphides, and sulfides.

Moreover, the electrode may comprise an electron conducting additive such as carbon nanoparticles, graphene, carbon nanotubes, graphite, metal nanotubes/wires, or metal nanoparticles and mixtures thereof.

The electrode may also comprise an electron conducting current collector like aluminum, copper, stainless steel, carbon or nickel foil, foams or other suitable 2D and 3D structures. Besides these basic components, the electrode may comprise additional functional additives, e.g., a polymer binder, to further enhance the electronic, ionic, thermal, and/or mechanical properties - depending on the targeted application.

The present invention also relates to a method for the preparation of the electrode as defined above, comprising the application, in particular by extrusion or by hot pressing, onto an electrode, preferably a porous electrode, composed of the active material, and possibly a conductive additive, a polymer binder, and an electron conducting current collector as defined above, of a mixture comprising the aromatic ionomer and the organic solvent as defined above, or comprising the application onto the electrode of the aromatic ionomer, followed by the application of the organic solvent.

The present invention also relates to a method for the preparation of the electrode as defined above, comprising the application of the polymer electrolyte as defined above, onto a cathode, and the hot pressing of said cathode at a temperature between 40°C and 120°C for a time period between 2 minutes and 10 minutes, preferably at 80°C for 4-5 minutes.

Alternatively, the preparation of the electrode may comprise the mixing of the ionomer, the active material, a conductive additive and potentially further additives as mentioned above, further processed by extrusion or hot pressing, thus, forming a suitable membrane, which is subsequently potentially applied on a current collector, as defined above, and doped with an organic solvent.

***Uses***

The present invention also relates to the use of the polymer electrolyte as defined above, as a polymer electrolyte

membrane in batteries, such as magnesium(-ion), sodium(-ion) lithium(-ion) or lithium-ion polymer batteries.

The present invention also relates to the use of the electrode as defined above, as a positive or negative electrode in batteries, such as magnesium(-ion), sodium(-ion), lithium(-ion) or lithium-ion polymer batteries.

The present invention also relates to a battery, such as magnesium(-ion), sodium(-ion), or lithium(-ion) battery or lithium-ion polymer, comprising at least one polymer electrolyte as defined above, and optionally the electrode as defined above as a positive or negative electrode.

According to an embodiment, the battery of the invention comprises the following elements: lithium metal/Electrolyte /electrode or negative electrode/electrolyte/electrode.

It may also comprise a current collector, such as: aluminum for positive electrode, possibly carbon, and copper or nickel, for instance, for the anode.

According to an embodiment, if metallic lithium is used as anode, the battery may possibly contain no current collector for the anode.

## FIGURES

In the following paragraphs, the term SI-A refers to membranes wherein SI is the ionomer of formula (A) as defined below and A means that the membrane was cast from Dimeyhyl Acetamide solution; and the term SI-Sx refers to membranes wherein SI is the ionomer of formula (A) as defined below and S means that the membrane was cast from DMSO solution. For each nomenclature, x represents the % of solvent (EC or PC in weight).

**Figure 1. Morphology, structure, and thermal properties of EC-doped SI-S/A membranes. a**, FE-SEM micrograph of dry SI-S, indicating the phase-separation between the hydrophilic (white) and hydrophobic (black) domains. **b**, Magnification of clustered hydrophobic nodules with a characteristic diameter of 20-30 nm. **c**, SANS (Small Angle Neutron Scattering) profiles of dried SI-A and SI-S films, revealing the presence of an intense correlation peak, thus, evidencing the nanoscale structuration. **d**, Evolution of the $T_g$ of the psi-PES and PFES blocks for varying EC contents; inset: Comparative evolution of the experimental and calculated $T_g$ values of the psi-PES block as a function of the EC concentration, considering that the EC interacts mainly with the psi-PES block.

**Figure 2. Transport properties of EC-doped SI membranes. a,** Temperature dependence of the conductivity of SI-Sx membranes with different EC contents compared to the two reference systems, i.e., Celgard® 2500 membranes soaked with LiPSI/EC and LiTFSI/EC solutions having a similar $Li^+$ concentration (0.5 $mol_{Li+}$ $kg^{-1}$) in a temperature range from 20°C to 90°C (LiPSI corresponding to $CF_3$-$(CF_2)_3$-$SO_2$-NLi-$SO_2$-$CF_3$ and LiTFSI corresponding to $CF_3$-$SO_2$-NLi-$SO_2$-$CF_3$). **b,** Variation of the conductivity at a fixed temperature of 30°C (filled symbols) and the activation energies (empty symbols) of SI-Sx (grey) and SI-Ax (black) membranes vs. the EC content. **c**, The conductivity of SI-Sx membranes at low temperature (from -10°C to 40°C), compared to the reference values of Celgard® 2500 membranes soaked with LiPSI/EC and LiTFSI/EC. **d,** The conductivity at 0°C as a function of time for SI-S50 and SI-S65.

**Figure 3. Electrochemical stability of EC-doped SI-S55 membranes.** Determination of the electrochemical stability window, exemplarily shown for SI-S55 membranes cast from DMSO, by means of linear sweep voltammetry (sweep rate: 1 mV $s^{-1}$, room temperature). For each experiment, freshly assembled Li|Ni pouch-type cells were used.

**Figure 4. Electrochemical stability of PC-doped SI10/5 70% PC membranes.** Determination of the electrochemical stability window, exemplarily shown for SI-10/5 membranes (10 corresponding to the length of ionic backbone in kg/mol and 5 to the length of hydrophobic block in kg/mol)(curve 1) performed by the second approach, by means of linear sweep voltammetry (sweep rate: 1 mV $s^{-1}$, room temperature).

**Figure 5.** (a) Galvanostatic cycling of a Li/(SI-10/5 70PC)/Li cell (green) and a Li/(LiTFSI/PC, 1M)/Li at 2 mA $cm^{-2}$ and (b) Galvanostatic cycling of a Li/((SI-10/5 70PC)/Li cell at 1 mA $cm^{-2}$ Inserts: Zoom on the voltage profiles at different time windows.

**Figure 6.** Charge and discharge capacities and coulombic efficiency of a $NCM_{111}$/Li cell using a (SI-10/5 70 PC) electrolyte at 20°C. First three cycles: C/20, then C/5. Galvanostatic cycling between 2.8 V and 4.3 V. Curve 1: Charge; Curve 2: Discharge; and Curve 3: Efficiency. ($NCM_{111}$ corresponding to $Li[Ni_{1/3}Co_{1/3}Mn_{1/3}]O_2$).

**Figure 7.** Charge and discharge capacities and coulombic efficiency of a $NCM_{111}$/Li cell using a SI10/5 70 PC electrolyte at 20°C. First three cycles: C/20, then C/5. Galvanostatic cycling between 2.8 V and 4.2 V. Curve 1: Charge; Curve 2: Discharge; and Curve 3: Efficiency.

**Figure 8.** Charge and discharge capacities and coulombic efficiency of a $NCM_{111}$/Li cell, using a (SI15/15 55EC) (with the ionomer of formula (A) and with a length of ionic backbone of 15 kg/mol and of hydrophobic block of 15 kg/mol) electrolyte at 40°C. First 3 cycles: C/20, then C/5. Constant current cycling between 2.8 V and 4.2 V. Curve 1: Charge; Curve 2: Discharge; and Curve 3: Efficiency.

**Figure 9.** Charge and discharge capacities and coulombic efficiency of a $NCM_{111}$/Li cell, using a SI-10/5 70 ADN electrolyte at 20°C. First 3 cycles: C/20, then C/5. Constant current cycling between 2.8 V and 4.2 V. Curve 1: Charge; Curve 2: Discharge; and Curve 3: Efficiency.

**Figure 10.** Consecutive cyclic voltamperometries of an aluminum electrode in (a) SI10/5 70 PC electrolyte and (b) LiTFSI/PC reference electrolyte (1M). CE = RE = Li metal; scan rate: 1 mV $s^{-1}$.

**Figure 11.** SEM images of the Al electrode after 20 cyclic voltamperometries between 3.0 V and 5.0 V vs Li metal at 1 mV $s^{-1}$. CE = RE = Li metal. (a) with (SI10/5)/PC, 3/7,wt. electrolyte. (b) with a LiTFSI/PC (1M) electrolyte.

**Figure 12.** Charge and discharge capacities (corresponding to the bottom curves) and coulombic efficiency (corresponding to the top curve) of a LFP($LiFePO_4$)/Li cell using a (SI10/5 70 PC) electrolyte at 20°C. First 3 cycles: C/10, then C/5. Constant current cycling between 2.5V and 4.1V.

**Figure 13.** Galvanostatic cycling of a Na/(SI-15/15 55EC)/Li I at 2 $\mu$A $cm^{-2}$ .

## EXAMPLES

## PREPARATION OF AN AROMATIC IONOMER

Partially fluorinated multi-block copoly(arylene ether sulfone)s bearing lithium perfluorosulfonimide functions (SI) were synthesized as described hereafter.

Said ionomer has the following formula (A):

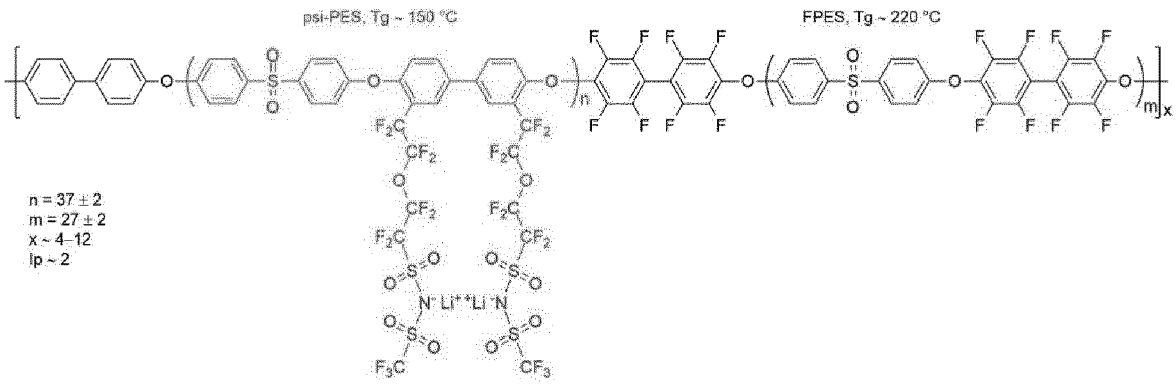


The copolymer backbone, synthesized by co-polycondensation *via* a "one-pot-two-reaction synthesis", was region-selectively brominated and the sulfonimide anion was chemically bonded to the backbone by Ullman's coupling reaction with lithium 1,1,2,2-tetrafluoro-2-(1,1,2,2-tetrafluoro-2-iodoethoxy)ethanesulfonimide (namely I-psiLi):

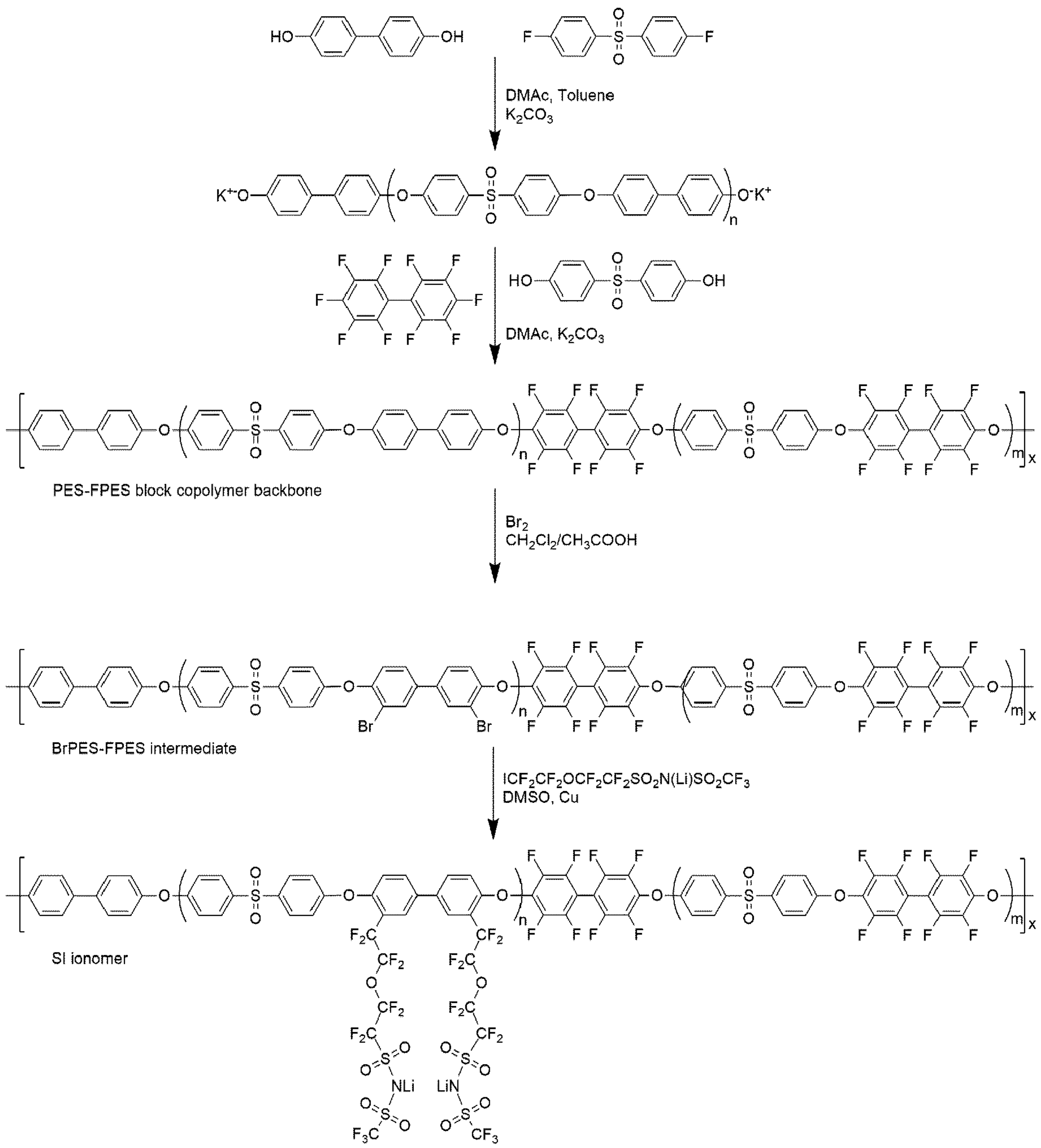


The ionomers were obtained *via* a three-step synthesis route: (i) The synthesis of the PES-FPES block copolymer backbone, (ii) the bromination of the PES-FPES block copolymer backbone to obtain the BrPES-FPES intermediate, and (iii) the coupling of BrPES-FPES with perfluorosulfonimide ionic functions.

**1. Synthesis of the PES-FPES multiblock copolymers.** In a typical protocol for the synthesis of the block copolymer PES-FPES 15/15 (lengths of PES and FPES blocks respectively in kg/mol), a 100-mL three-neck round bottom flask, equipped with a mechanical stirrer, a condenser, an argon inlet-outlet, and a Dean-Stark trap, was charged with DFDPS (4.000 g, 15.733 mmol) and BP (3.010 g, 16.164 mmol). DMAc (30 mL) was added to provide ~25% (w/v) of monomer in the solvent. As the mixture was completely dissolved, $K_2CO_3$ (6.701 g, 0.0485 mol) and 15 mL of toluene, serving as azeotroping agent, were added. The ratio of DMAc to toluene (v/v) was 2:1. The reaction bath was heated to 150°C and kept at this temperature for 4 h to dehydrate the system. Then, the bath temperature was slowly increased to 160°C to completely evaporate the toluene. Subsequently, the temperature of the reaction bath was decreased to 120°C and the polymerization was allowed to proceed at this temperature for 24 h. Afterwards, the reaction bath was cooled down to 70°C and $K_2CO_3$ (3.084 g, 0.0223 mol), a solution of 1.862 g of DHDPS (7.439 mmol in 5 ml) in 5 mL, DFBP (2.630 g, 7.870 mmol), and 20 mL of DMAc were added to the reaction medium. After

2 h the mixture was precipitated into 1000 mL of 1M HCl under magnetic stirring and kept for 8 h before being filtered and rinsed with distilled water until a neutral pH was reached. The final product was dried under vacuum at 100°C for 12 h.

$^1$H-NMR: ($CDCl_3$): δ (ppm) 7.91-7.89 (d, 4H), 7.83-7.81 (d, 4H), 7.52-7.50 (d, 4H), 7.09-6.98 (m, 12H).

$^{19}$F-NMR: ($CDCl_3$): δ (ppm) -137.81 (s, Ar-F), -138.20 (m, Ar-F), -153.28 (s, Ar-F), -153.68 (m, Ar-F).

**2. Synthesis of the BrPES-FPES intermediate.** The bromination of PES-FPES was carried out in a mixture of distilled dichloromethane and acetic acid (10% v/v) by adding bromine ($Br_2$) at room temperature. In a typical procedure, 10 g of PES-FPES 15/15 (12.515 mmol of BP unit) was introduced into a 500-mL three-neck round bottom flask equipped with an argon inlet, a condenser, and a mechanical stirrer. Then 180 mL of dichloromethane ($CH_2Cl_2$) distilled from $CaH_2$ and 18 mL of distilled acetic acid were added. When the polymer was completely dissolved, 9.688 mL (0.188 mol) of $Br_2$ were drop-by-drop introduced to the reaction mixture and the latter was subsequently stirred for 24 h. Afterwards, the reaction mixture was poured into methanol and kept under agitation for 24 h. After that, the polymer was filtered and rinsed several times with methanol. The thus obtained polymer was dried under vacuum at 60 °C for 24 h. The overall yield for the bromination is ~95-98 %.

$^1$H-NMR ($CDCl_3$): δ (ppm) 7.91-7.89 (d, 4H), 7.85-7.82 (d, 4H), 7.77 (s, 2H), 7.45-7.43 (d, 2H), 7.08-7.06 (d, 6H), 6.96-6.94 (d, 4H)

$^{19}$F-NMR ($CDCl_3$): δ (ppm) -137.81 (s, Ar-F), -138.20 (m, Ar-F), -153.28 (s, Ar-F), -153.68 (m, Ar-F).

**3. Synthesis of the perfluorosulfonimide ionic functions (I-psiLi).** For the synthesis of *N*-(trifluoromethanesulfonyl)-1,1,2,2-tetrafluoro-2-(1,1,2,2-tetrafluoro-2-iodoethoxy)ethanesulfonamide lithium ($ICF_2CF_2OCF_2CF_2SO_2N^-(Li^+)SO_2CF_3$ or I-psiLi), 8.400 g (0.0563 mol) $CF_3SO_2NH_2$ were introduced into a 100-mL two-neck round bottom flask, charged with an air condenser and a magnetic stirrer. Then, 10.452 g (0.103 mol) of TEA, freshly distilled from $CaH_2$, and 20 mL of can, freshly distilled from $CaH_2$, were added. The mixture was stirred to dissolve the solid and 20.000 g (0.0469 mol) of $ICF_2CF_2OCF_2CF_2SO_2F$ were added. The mixture was heated to 40 °C and the reaction was allowed to proceed for ~36-40 h. The reaction progress was monitored by $^{19}$F NMR spectroscopy. When the peak corresponding to $SO_2F$ (44.77 ppm) disappeared, the reaction was stopped. The resulting red mixture was loaded into a rotary evaporator at 40 °C to remove the solvent. The residue was dissolved in (200-250 ml) dichloromethane, washed with 1000 mL of distilled water, and dried over magnesium sulfate. After removing the solvent once more by means of a rotary evaporator at 40 °C, a red oil was obtained.

This red oil was dissolved in 0.5M LiOH (using a 5% excess of LiOH). After stirring the solution for 15 minutes, the water was removed by freeze-drying. The resulting viscous oil was dissolved in ethyl acetate, dried over magnesium sulfate, and the solvent was removed by means of a rotary evaporator. The residue was dried under vacuum at 40 °C for 24 h to obtain a light yellow solid. The final chemical yield of the I-psiLi synthesis was ~65-70 %.

$^{19}$F-NMR (Acetone-d6) δ (ppm): -69.36 (t, $ICF_2$), -82.06 (t, $CF_2O$), -86.37 (t, $OCF_2$), -117.18 (m, $CF_2SO_2$), -79.87 (s, $CF_3$).

**4. Synthesis of the SI Ionomer.** The perfluorosulfonimide-based ionomers were synthesized *via* the Ullman coupling reaction of BrPES-FPES with lithium 1,1,2,2-tetra- fluoro-2-(1,1,2,2-tetrafluoro-2-iodoethoxy)ethanesulfonimide (I-psiLi). In a typical procedure, 4.000 g (3.599 mmol of diphenyl units) BrPES-FPES 5/5, 3.43 g (54.0 mmol) powdrous copper, and 30 ml DMSO were added into a 100-mL three-neck round bottom flask, equipped with a mechanical stirrer, a condenser, an argon inlet-outlet, and an addition funnel. The mixture was stirred at 60 °C until the polymer was completely dissolved. Subsequently, the bath temperature was increased to 120 °C under continuous stirring for 2 h. Afterwards, 8.076 g (14.40 mmol) of I-psiLi were dissolved in DMSO (30% m/v) and added drop-by-drop to the reaction mixture, while the bath temperature was increased to 140 °C. The reaction was allowed to proceed at that temperature for 24 h. After the copper powder was removed by centrifugation at 5000 rpm for 15 minutes, the ionomer was precipitated into 1000 mL 1M HCl and kept under strong agitation for 24 h. Finally, the polymer was filtered and washed with distilled water until a neutral pH was reached. The ionomer was dried at 60 °C under vacuum for 24 h. The chemical yield of the coupling reaction was ~80-85%.

$^1$H-NMR: (DMSO.d6): δ (ppm) 8.09-7.82 (m), 7.45 (s), 7.35-7.32 (m), 7.27-7.05 (m).

$^{19}$F-NMR: (DMSO.d6): δ (ppm) -78.77 (d, $CF_3SO_2$), -81.16 (s, $-CF_2O$), -86.11 (s, $-OCF_2$), -110.70 (d, Ar-$CF_2$), -116.54 (s, $CF_2SO_2$), -137.81 (s, Ar-F), -138.20 (m, Ar-F), -153.28 (s, Ar-F), -153.68 (m, Ar-F).

## PREPARATION OF THE POLYMER ELECTROLYTE

The polymer electrolyte membranes were prepared in two steps: (i) preparation of dry ionomer films using a solvent-cast method and (ii) their doping with different amounts of ethylene carbonate (EC, Sigma Aldrich).

In the first step, the ionomer films were cast from an ionomer dissolved in an organic solvent. For this study, two solvents were used: (i) a block-copolymer selective solvent (dissolving only the ionic block), i.e., dimethyl sulfoxide (DMSO), and a non-selective solvent, i.e., dimethylacetamide (DMAc). Typically, 1.00 g of SI ionomer was introduced into DMSO (or DMAc) and the mixture containing 7 wt% of solid was stirred at 60°C for 24 h to obtain a homogeneous

solution. Then, the polymer solution was centrifuged at 5000 rpm for 15 min to remove solid impurities and left under vacuum for additional 15 min to remove gas bubbles. The homogeneous mixture was cast onto a clean glass substrate using a casting knife (Elcometer 4340 Automatic Film Applicator). The solvent was evaporated in an oven at 60 °C. To allow for a better phase separation between the ionic and hydrophobic blocks, the films were subjected to an additional thermal treatment at 150°C for 24 h in a closed vacuum chamber. Subsequently, the films were immersed in and rinsed many times using distilled water for 24 h to completely remove remaining casting solvent. The solvent-free membranes, verified by $^1H$ NMR, were dried under vacuum at 130°C for 24 h and stored in an argon-filled glovebox. To obtain the polymer electrolytes, the dried ionomer films were imbibed with EC by immersing the membranes in the solvent at 45 °C inside the glovebox.

The solvent content (SC, wt%), controlled by the immersing time, was calculated according to Equation 1:

$$SC = \frac{W_s - W_d}{W_s} \times 100\% \qquad (1)$$

where $W_s$ and $W_d$ are the weight of swollen and dried membranes, respectively. For the sample nomenclature, a suffix -Sx or -Ax was added to indicate the DMSO-cast or DMAc-cast membranes, respectively, and x is the SC (wt%).

## EXPERIMENTAL

**Lithium concentration.** The lithium concentration ($C_{Li}$, mol of $Li^+$ per kg of electrolyte) in dried ionomer films was obtained from the ion-exchange capacity (IEC) of the dry membranes, determined from both $^{19}F$ NMR spectra and acid-base titration of the ionomers in their acidic form as described in Assumma, L. et a/. Synthesis of Partially Fluorinated Poly(Arylene Ether Sulfone) Multiblock Copolymers Bearing Perfluorosulfonic Functions. J. Polym. Sci. Part A Polym. Chem. 53, 1941-1956 (2015).

The lithium concentration in EC-doped membranes was calculated by Equation 2:

$$C_{Li} = \frac{IEC}{1 + 0.01 \times SU} \qquad (2)$$

where IEC is the ion-exchange capacity of the dry membranes and SU (%) is the solvent uptake of the dry ionomer membrane, calculated by Equation 3:

$$SU = \frac{W_s - W_d}{W_d} \times 100\% \qquad (3)$$

here $W_s$ and $W_d$ are the weights of the swollen and dry membranes, respectively.

**Thermal properties.** The glass transition temperature ($T_g$), enthalpy ($\Delta H$), and crystallinity of the samples were determined using a differential scanning calorimeter (DSC, 1 $STAR^e$ System from Mettler-Toledo). Around 10 mg of sample was sealed in an aluminum capsule inside the glovebox and the measurements were carried out with a heating rate of 10 °C $min^{-1}$ from -100 to 220 °C under an argon flux of 50 mL $min^{-1}$. The thermal stability of the SI ionomers was analyzed from 50 to 750 °C with a heating rate of 10 °C $min^{-1}$ using a thermogravimetric analyzer (TGA, 1 $STAR^e$ System from Mettler-Toledo) under compressed air (80 % $N_2$ and 20% $O_2$) with a flow rate of 20 mL $min^{-1}$. To compare the evaporation rate of EC in the ionomer membranes and in psi/EC-soaked Celgard® 2500 membranes, the samples (calculated to contain around 10 mg EC) were stabilized at 100 °C in the TGA chamber under an argon flow of 40 mL $min^{-1}$ and the sample mass was recorded for 300 minutes.

**Morphology.** Small-angle neutron scattering (SANS) measurements were performed on D22 spectrometer at the Institut Laue-Langevin (ILL, Grenoble, France). The electrolyte membranes containing different EC amount were sealed in aluminum pouch bags at room temperature in a glovebox to avoid any contact with air and moisture. Two configurations were used to cover an extended Q-range from $4\times10^{-3}$ to $6\times10^{-1}$ $Å^{-1}$. Q is the wave vector defined as Q = $(4\pi/\lambda)\times\sin(\theta/2)$, where A is the wavelength of the incident neutron beam and $\theta$ is the total scattering angle. Isotropic 2D patterns recorded in these two configurations were radially averaged to obtain 1D scattered intensities I(Q). The latter were further corrected using standard procedures (detector efficiency, background, and pouch bag subtraction). The I(Q) plots were merged to obtain a single spectrum for each sample as the data taken in the two configurations perfectly overlap in the intermediate Q-region. Absolute intensities were obtained by correcting the measured intensity by the sample thickness, transmission, and incoming flux. The polymer volume fraction ($\Phi p$) was calculated by Equation 4:

$$\Phi_p = \frac{D_{EC}}{D_{EC} + 0.01 \times SU \times D_i} \quad (4)$$

where $D_{EC}$ and $D_i$ are the density of EC (1.32 g $cm^{-3}$) and the ionomer in dry state (~1.61 g $cm^{-3}$), respectively. SU (%) is the solvent uptake. $D_i$ was measured *via* a Mettler-Toledo density kit, using the Buoyancy technique at 20 °C and toluene (0.87 g $mL^{-1}$) as the liquid phase. The morphology of the samples was analyzed by field emission scanning electron microscopy (FE-SEM, ZEISS Gemini SEM 500) on dried membranes in the lead-salt form.

**Transport properties.** The self-diffusion coefficients of lithium and fluorine were measured by PFG-NMR using a 9.4T Bruker Avance 400 with a diffusion probe of 5 mm. Ionomer membranes containing different EC content were cut in bands and introduced into an NMR sealed tube inside the glovebox. Measurements were carried out at 70.0 ± 0.5 °C. The ionic conductivity was determined using a HP impedance analyzer (4192A LF) in the temperature range from -10 to 90 °C with 10°C steps. The electrolytes, i.e., the EC-doped SI membranes or Celgard® 2500 membranes immersed in psi/EC or LiTFSI/EC, were sandwiched between two stainless steel blocking electrodes and sealed in Swagelok®-type cells inside the glovebox. The cells were allowed to stabilize at a given temperature for 1 h prior to each measurement and the temperature was controlled using a climatic chamber. Impedance spectra were recorded in a frequency range from 5 Hz to13 MHz, applying a voltage amplitude of 0.02 V. The bulk resistance of the membrane was determined as the intercept of the semicircle with the real axis in the Nyquist plot of the obtained data, analyzed and fitted using ZView software. The conductivity was eventually calculated using Equation 5:

$$\sigma = \frac{L}{R \times S} \quad (5)$$

where L is the electrolyte membrane thickness measured after the measurement, S is the electrode surface area, and R is the bulk membrane resistance. In case of the two liquid reference samples, soaked in Celgard® membranes, the overall ionic conductivity was multiplied with the transference number to obtain the lithium ion conductivity only. The activation energy ($E_a$) was determined by fitting the conductivity plots with a Vogel-Tamman-Fulcher (VTF) equation (Equation 6) using Solver tool.

$$\sigma = Ae^{\frac{-E_a}{R(T-T_0)}} \quad (6)$$

where $\sigma$ is the ionic conductivity (S $cm^{-1}$), $A = \sigma_0 T^{-0.5}$ is the temperature-dependent pre-exponential factor (S $cm^{-1}$), $E_a$ is the activation energy (J $mol^{-1}$), R = 8.314 J $mol^{-1}$ $K^{-1}$ is universal gas constant, $T_0$ = Tg - 50 and T is the ambient temperature (K).

**Electrochemical stability.** For determining the electrochemical stability of the electrolyte membranes, pouch bag-type cells were assembled in a dry room (dew point of the incoming air: *ca*. -80 °C), containing the electrolyte samples sandwiched between metallic Li (Rockwood, battery grade) and Ni foil. The cells were sealed under vacuum and subjected to linear sweep voltammetry (LSV) by means of a VMP3 (BioLogic) and applying a sweep rate of 1 mV $s^{-1}$. For each LSV experiment freshly made cells were used in order to avoid any impact of potential decomposition products. To further investigate the electrochemical stability towards oxidation, additional cells were assembled and subjected to cyclic voltammetry (CV) experiments, using the same sweep rate and setting the reversing voltages to 5.0 and 3.0 V *vs.* $Li^+$/Li.

**Evaluation in symmetric Li|Li as well as Li|$V_2O_5$, Li|$LiFePO_4$, and Li|Li$[Ni_{1/3}Co_{1/3}Mn_{1/3}]O_2$ full-cells.** Lithium stripping/plating experiments were performed by sandwiching the electrolyte membranes between two lithium disks (Ø = 14 mm), assembled in coin cells, and applying varying alternating current densities for 30 min per interval (5 min rest in-between each step) using a VMP3 (BioLogic). The limiting current density was determined by assembling symmetric Li|Li pouch cells in a dry room, incorporating the electrolyte membranes and following the same procedure as for the determination of the ESW. Similarly, full-cells including $V_2O_5$ thin films as cathode were prepared and subjected to cyclic voltammetry studies (sweep rate: 0.05 mV $s^{-1}$). In order to confirm the general suitability of these membranes as lithium battery electrolytes also cells comprising $LiFePO_4$ as cathode material were prepared and subjected to the same electrochemical tests as the $V_2O_5$ thin film cathodes.

## ELECTROLYTE FABRICATION AND CHARACTERIZATION

Self-standing polymer electrolyte membranes were obtained by impregnating the multiblock copolymer (SI)

film of typically 60 μm in thickness with different amounts of EC. The SI molecular structure was carefully designed to obtain a copolymer able to spontaneously self-assemble and to form films with a nanophase-separated microstructure.

The ionomer is formed by alternating incompatible ionic and hydrophobic blocks (i.e., psi-PES and FPES, respectively) - both with an average backbone length of 15 kg $mol^{-1}$ and polydispersity index close to 2.0.

Each repeating unit of the psi-PES blocks contains approximatively two highly dissociating perfluorosulfonimide anions, grafted to the polymer chain by using the Ullmann coupling reaction. The FPES block was tailored to be insoluble in EC and possess a high $T_g$ (~220 °C) as well as mechanical strength.

The SI membranes were obtained by casting an ionomer solution, incorporating either dimethyl sulfoxide (DMSO) as a selective solvent (dissolving only the psi-PES block) or dimethylacetamide (DMAc) as a non-selective solvent (dissolving both blocks). The resulting dry films are labeled as SI-S and SI-A in case of DMSO and DMAc, respectively. The morphology of the dried films was investigated by field-emission scanning electron microscopy (FE-SEM) and small-angle neutron scattering (SANS). The FE-SEM micrograph for SI-S (Figure 1a) displays a phase-separated microstructure with hydrophobic domains (dark regions) dispersed into to a continuous ionic phase (white regions). The hydrophobic phase (representing approximatively 28 wt% of the copolymer) appears as nodules of typically 20-30 nm in size, being either isolated or clustered (Figure 1b). This phase separation is confirmed also by the presence of an intense correlation peak in the SANS pattern recorded for the dried membranes (Figure 1c). The peak position is well-defined for SI-S at a wave vector (Q) of ~0.016 $Å^{-1}$, indicating a long-range ordering with a typical mean separation distance of about 40 nm. This is in excellent agreement with the FE-SEM data. In case of SI-A, the peak is broader and positioned at Q = ~0.009 $Å^{-1}$, revealing a relatively irregular structure when using DMAc as solvent and the presence of a comparably larger correlation distance of ca. 70 nm.

As also apparent from Figure 1c, the SANS high-Q intensities nicely scale as $Q^{-4}$ following the Porod's law, thus indicating sharp interfaces between the ionic and hydrophobic domains, which is consistent with the sharp contrasts observed in the FE-SEM micrographs. In a next step, we investigated the microstructure as a function of the solvent uptake - in the present case EC - which is incorporated to enhance the cation transport.

Complementary with this, for an EC content of up to 50 wt%, the EC molecules strongly plasticize and interact with the psi-PES block, as confirmed by a steep decrease of the $T_g$ (Figure 1d). For higher EC concentrations a plateau is reached. On the other hand, the $T_g$ of the FPES block is generally not substantially affected by the varying EC content, thus it can be supposed the EC preferentially interacting with ps-PES segments. Calculating the $T_g$ using the Flory-Fox equation in consideration of this finding, shows that the thus obtained values fit very well with the experimentally determined ones (inset of Figure 1d) for EC concentrations of less than 50 wt%. From 50 wt% the crystallization of free EC is observed, explaining the subsequent differences between the theoretical and experimental data (inset of Figure 1d). In sum, based on both DSC and SANS results, we may conclude at this point that the nanostructured SI-S/Ax membranes selectively incorporate EC in the ionophilic regions, yielding interconnected nanoscale domains with the clustered hydrophobic domains being macroscopically separated by the length of the shorter hydrophilic block. The EC molecules selectively solvate the ionic regions, inducing the reorganization of the psi-PES chains. This solvent uptake and corresponding increase in volume of the psi-PES domains is accommodated within the phase-separated nanostructure up to an EC content of ~50 wt% as a result of the preferential interaction between EC and psi-PES as well as the availability of free space within the initial structure. Above this threshold, the additional EC molecules are in excess and accumulate along the grain boundaries and/or self-assemble into segregated domains. As such, these membranes are composed of homogenously dispersed rigid hydrophobic nanodomains of about 20-40 nm in size, embedded in and chemically bonded to the EC plasticized ionophilic domains, thus ensuring a high mechanical stability of the copolymer films.

In a subsequent step, the thermogravimetric analysis of the samples were performed. Both membranes SI-S and SI-A (i.e., in the dried state) revealed a thermal stability of up to more than 300°C, while the evaporation of EC in the doped SI-S/Ax membranes was delayed by more than 50°C with respect to the boiling point of EC (243°C). Additionally, the EC evaporation rate (correlated to the flash point), exemplarily shown for SI-S50, was approximatively two-times lower compared to EC-soaked Celgard® 2500 membranes, underlining the greatly improved safety features of these membranes compared to liquid electrolytes.

## IONIC CONDUCTIVITY AND TRANSPORT PROPERTIES

The cationic transference number ($t^+$) was determined by measuring the diffusion coefficient of lithium ($D_{Li}$) and fluorine ($D_F$) using pulsed-field gradient nuclear magnetic resonance (PFG-NMR) spectroscopy (e.g., for SI-A30 and SI-A50; Table 1). The results revealed $t^+$ values of 1. The $t^+$ of the reference liquid electrolyte comprising a salt mimicking the SI side chain, i.e., $CF_3$-$(CF_2)_3$-$SO_2$-NLi-$SO_2$-$CF_3$ (LiPSI, 0.52 mol $kg^{-1}$) in EC is 0.46, which is slightly higher than that of LiTFSI dissolved in EC (0.41) but rather far from unity.

**Table 1. $Li^+$ and $F^-$ diffusion coefficients and transference number of EC-doped SI membranes determined by performing PFG-NMR spectroscopy**

| D ($\times$ $10^{-10}$ $m^2s^{-1}$) | $D_{Li}$ | $D_F$ | $t^+$ |
|---|---|---|---|
| SI-A30 | 0.96 | no measurable diffusion | 1 |
| SI-A50 | 1.3 | no measurable diffusion | 1 |
| LiPSI/EC (0.52 mol $kg^{-1}$) | 3.4 | 4 | 0.46 |

The temperature dependence of the ionic conductivity for the SI-Sx and SI-Ax series, determined in a second step, is plotted in Figure 2a. Figure 2a also presents the data for Celgard® membranes impregnated with LiPSI/EC or LiTFSI/EC as references. An increase in EC content induces a continuous rise in conductivity, which is assigned to the (i) better percolation of the ionic domains, (ii) enhanced ion pair dissociation, i.e., increasing number of free mobile charges, (iii) decreased local viscosity, facilitating faster ion motions, and (iv) an improved electrolyte-electrode interface. Remarkably, the membranes with an EC content exceeding 50 wt% outperform the two liquid reference samples across the whole temperature range (Figure 2a). In fact, the conductivity above 30°C is higher than $10^{-3}$ S.$cm^{-1}$, i.e., substantially higher than those reported for perfluorinated ionomer membranes (Cai, Z. et a/. High performance of lithium-ion polymer battery based on non-aqueous lithiated perfluorinated sulfonic ion-exchange membranes. Energy Environ. Sci. 5, 5690-5693 (2012) and Jin, Z., Xie, K. & Hong, X. Synthesis and electrochemical properties of a perfluorinated ionomer with lithium sulfonyl dicyanomethide functional groups. J. Mater. Chem. A 342-347 (2013). doi:10.1039/c2ta00134a) and approaching that of conventional liquid electrolytes - not least with respect to the substantially lower $Li^+$ transference number of such liquid systems. Figure 2b shows the evolution of the conductivity taken at 30°C and the activation energy determined for all SI-S/Ax films in dependence of x, showing the slightly higher conductivity of the SI-Sx electrolytes and distinct behaviours for low and high EC concentrations with a threshold at about 45-55 wt% (grey zone in Figure 2b). In fact, the low-EC region shows a steep linear increase in conductivity (from $1.0\times10^{-6}$ to $2.0\times10^{-4}$ S $cm^{-1}$) accompanied by a marked activation energy reduction (from 11.0 to 5.0 kJ $mol^{-1}$), which is not observed in the high-EC region.

For x<50, EC strongly interacts with the polymer, thus significantly contributing to the ion pair dissociation and polymer plasticization. For x>50, the membranes contain free EC, leading as well to an enhanced Li-ion mobility, presumably related to a reduced local viscosity and potentially further enhanced percolation of the ionic domains. This beneficial effect, however, is largely counterbalanced by the corresponding decrease in charge carrier concentration. The presence of free EC at x>50 and its contribution to $Li^+$ conduction is nicely illustrated by the sudden conductivity decrease in case of, e.g., SI-S65 at temperatures below 0°C (Figure 2c), attributed to the EC crystallization. We may note, nonetheless, the excellent conductivity recovery ($3.2x10^{-4}$ S $cm^{-1}$) at 0°C after heating up the electrolyte again, in fact, a remarkable ionic conductivity for such low temperatures, which is then maintained for at least 20 h (Figure 2d).

## ELECTROCHEMICAL STABILITY

The electrochemical stability window (ESW) is a fundamental characteristic of electrolytes. Hence, the membranes were subjected to sweeping voltammetry experiments - the results for SI-S55 are exemplarily shown in Figure 3. Overall, these membranes reveal an ESW of almost 5 V. A closer inspection of the tiny peaks in the cathodic sweep reveals that some DMSO traces remained in the membrane as indicated by the peak at ~1.2 V. The additional feature below 1.0 V is assigned to the reductive decomposition of EC, resulting in the formation of a stable electrode/electrolyte interphase. The sharp increase below 0 V is characteristic for metallic lithium deposition. The anodic sweep reveals a small peak (4.6-4.7 V), ascribable as well to the presence of remaining DMSO traces. It is worth mentioning that these DMSO-related features vanish upon continuous cycling and do not appear for those membranes cast from DMAc. The anodic stability of these membranes, however, is limited to ca. 4.8-4.9 V, presumably as a result of the EC oxidation, which is, as a matter of fact, consistent with those membranes cast from DMAc.

The results for the ESW of another set of membranes, i.e. SI10/5 comprising 70 %wt. PC (propylene carbonate), are exemplarily shown in Figure 4. Overall, these membranes reveal an ESW of almost 5 V.

## CATHODE COMPOSITE PREPARATION

The cathode electrode was prepared by blending $NCM_{111}$ (provided by Toda Kogyo Europe GmbH), Super P carbon (Super C45, Imerys), PVDF (Solef® 5140, SOLVAY) and SI10/5 in a ratio of 80:10:7.5:2.5 wt% in a N-methylpyrrolidone slurry, which was subsequently cast on aluminum foil. They were then dried for 2-3 days at 80°C and subsequently cut into 12-mm-diameter disks and, eventually, dried at 120°C for 2 days under dynamic vacuum.

The polymer electrolyte was cut in small disks (diameter: 14 mm) and placed on the NCM electrodes (diameter: 12 mm). After being stored at 80°C for 4-5 min, the laminated polymer electrolyte/electrode was assembled with lithium foil into a coin cell for battery tests.

## EVALUATION IN SYMMETRIC LI|LI CELLS

The operation of lithium metal anodes at high current densities is very challenging, especially for the charge process (i.e., lithium plating), since at high current densities, when $Li^+$ is fully depleted at the electrode, where it is being plated, dendrite growth is quickly triggered. With the nanostructured, plasticized SI10/5 (70% wt. PC), it was possible to cycle Li/Li cells at 2 mA $cm^{-2}$ with exceptionally low overvoltage, as compared with a liquid electrolyte (i.e., 1M LiTFSI PC) electrolyte (Figure 5).

No evidence for any dendrite formation/growth was observed during the lithium plating/striping at 2 mA $m^{-2}$ for 740 cycles or at 1 mA.$cm^{-2}$ for 1,420 cycles (Figure 5a and 5b, respectively).

Besides, the immediate achievement of the steady state voltage upon current reversal (inset) confirms that $Li^+$ is the only charge carrier ($t^+ = 1$), contrarily to what is observed with the reference LiTFSI/PC electrolyte, where the resistance increases as a result of increased diffusion limitations (due to concentration gradients) during each cycle.

## EVALUATION IN LI|CATHODE CELLS

A main drawback of PEO-based electrolytes, both 'dry' (i.e., without plasticizer) or plasticized (gelled membranes) consists in their limited anodic stability, which prevents the operation of Li metal batteries incorporating state-of-the-art, high-energy cathodes like $LiCoO_2$ or $LiNi_{1-x-x}Co_xMn_yO_2$ (NCM), which reversibly host lithium ions at 4.2-4.3V vs. Li metal. This severe limitation causes their relatively low practical energy density compared to lithium-ion batteries, comprising liquid organic electrolytes, despite the use of Li metal in place of graphite.

By using the nanostructured ionomer of the invention, it was possible to cycle $LiNi_{0.33}Co_{0.33}Mn_{0.33}O_2$ ($NCM_{111}$)/Li batteries in a highly stable manner without building up any significant overvoltage over time and with a coulombic efficiency up to 99.6% after stabilization) as shown in Figures 6-8.

In Figure 6, the charge and discharge capacity of $NCM_{111}$/Li cells using SI10/5 70PC, prepared by approach 2, is presented.

Using EC as plasticizer at 55% wt. with SI15/15 (ionomer of formula (A) with 15 corresponding to the length of ionic backbone in kg/mol and 15 to the length of hydrophobic block in kg/mol), it was also possible to cycle $NCM_{111}$/Li cells steadily at 40 °C, as shown in Figure 8.

Using the ADN (adiponitrile) plasticized SI10/5 electrolyte (70 wt% ADN), the cycling of $NCM_{111}$/Li cells was possible at 20°C as well, as shown in Figure 9, even though alkyl nitrile solvents are not, in general, favorable for Li metal cycling.

The LFP electrode was prepared same as NMC electrode with LFP: super P: PVDF: SI10/5= 8/1/0.75/0.25 wt/wt/wt/wt. The mass loading is ~1.41 mg $cm^{-2}$.

Initial coulombic efficiency: 97.1%. The capacity retention: discharge capacity at 132$^{th}$ cycle/ discharge capacity at 4$^{th}$ cycle at 0.2C= 94.2% (Figure 12).

## CORROSION OF THE ALUMINUM CURRENT COLLECTOR

An issue often arising when using LiTFSI as lithium salt above 3.8-4.0 V is the corrosion of the aluminum current collector at the cathode. With the nanostructured ionomer plasticized with PC, it was found that no aluminum corrosion occurs up to 5 V as shown in Figure 10a. In fact, under these conditions (i.e., cyclic voltammetry at 1 mV $s^{-1}$ between 3.0 V and 5.0 V vs. Li metal) we can also observe that, after the first scan, no residual oxidation currents occur below 4.5 V and the evolving current is well below 1 $\mu$A $cm^{-2}$ at 5.0 V. The maximum current observed at 5.0 V in the first cycle is still below 3.5 $\mu$A $cm^{-2}$, which is extremely low. By comparison, the 1M LiTFSI/PC electrolyte was used applying the same conditions and the result is shown in Figure 10b. As can be seen, high evolving currents (i.e., above 2 mA $cm^{-2}$) are recorded for many cycles, starting at ca. 3.75 V.

The cells were disassembled after the test and analyzed by means of SEM. As can be seen in Figure 11a, the electrode tested in the SI10/5/PC electrolyte does not present any sign of corrosion, while the electrode cycled in the PC/LiTFSI electrolyte shows obvious signs of corrosion.

## EVALUATION IN SYMMETRIC NA/NA CELLS

Sodium stripping/plating experiments were performed at 40°C by sandwiching the electrolyte membranes between two sodium disks (Ø = 12 mm), assembled in coin cells und argon atmosphere, and applying a current density

of ±2 μA $cm^{-2}$ for 30 min per interval (5 min rest between each step) using a VMP3 potentiostat/galvanostat (BioLogic).

Figure 13 shows the close-up of selected stripping/plating cycles (27th to 30th). The constant voltage response confirms the single-ion conductivity, as also observed for the lithium derivatives, and the overvoltage remains stable within the scope of the experiment, indicating a high stability towards metallic sodium, i.e., the realization of a stable electrode/electrolyte interface.

## Claims

**1.** A polymer electrolyte comprising at least one organic solvent and at least one aromatic ionomer, wherein:

- the organic solvent is a plasticizing solvent with a boiling point higher than 100°C and an electrochemical stability window of at least 2 V,
- the aromatic ionomer comprises alternating ionic and nonionic segments; said aromatic ionomer comprising:

  • at least nonionic aromatic repeating units UAr1, and
  • at least one ionic repeating unit UI1 having the following formula (I):

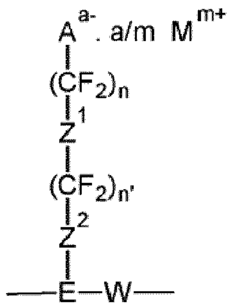

(I)

wherein:

• M is an alkali metal cation, an alkaline-earth metal cation, a transition metal cation, or an ammonium cation with a valency m, with $1 \leq m \leq 3$, m being an integer,
• $A^{a-}$ is an anion chosen from a sulfonate anion, a sulfonimide anion of formula $-SO_2-N^--SO_2R$, an anion derived from a sulfonimide anion bearing at least two negative charges, and a carbanion of formula $-SO_2-C^-R'R''$, with $1 \leq a \leq 3$, a being an integer,

∗ R representing:

- a fluorine atom;
- an optionally fluoro or perfluoro alkyl group, containing from 1 to 8 carbon atoms;
- an optionally fluoro or perfluoro alkoxy group, containing from 1 to 8 carbon atoms;
- a thiocyanate group (-SCN);
- a phenyl group optionally substituted with an electron-withdrawing group X;
- a nitrile group;
- a group $-NR^1$ being chosen from a saturated heterocycle containing from 3 to 6 carbon atoms and an unsaturated heterocycle containing from 4 to 6 carbon atoms;
- a dicyanamide group $-N(CN)_2$;
- a tricyanomethyl group $-C(CN)_3$;

*with R' and R" being chosen, independently of each other, from the following monovalent groups:

- a fluorine atom;
- a thiocyanate group;
- a nitrile group;
- a nitro group;

- a sulfoxide group of formula $-SOR^2$ in which $R^2$ is optionally a fluoro or perfluoro alkyl group, containing from 1 to 5 carbon atoms or an optionally fluoro or perfluoro dialkyl ether group, containing from 1 to 5 carbon atoms;
- a sulfonyl group of formula $-SO_2R^3$ in which $R^3$ is a fluorine atom, a thiocyanate group, a nitrile group, an optionally fluoro or perfluoro alkoxy group, containing from 1 to 5 carbon atoms, an optionally fluoro or perfluoro alkyl group, containing from 1 to 5 carbon atoms or an optionally fluoro or perfluoro dialkyl ether group, containing from 1 to 5 carbon atoms;
- a carboxylic ester group of formula $-COOR^4$, in which $R^4$ is an alkyl group containing from 1 to 5 carbon atoms;
- an optionally substituted phenyl group; or
- an optionally substituted phenoxy group;

*with R' and R" being divalent groups such that the resulting carbanion radical -C-R'R" forms an aromatic ring comprising from 5 to 6 carbon atoms and optionally one or more heteroatoms O or N, said aromatic ring being optionally substituted with one or more nitrile groups;

• W is an oxygen atom, a sulfur atom or a -NR'''- group, R''' being H or a $(C_1-C_3)$alkyl group;
• $1 \leq n \leq 4$, n being an integer,
• $1 \leq n' \leq 2$, n' being an integer,
• $Z^1$ is chosen from a single bond, an oxygen atom, a sulfur atom, a group -S(=O)-, a group $-S((=O)_2)-$ and a phenyl group optionally substituted in the ortho position relative to one of the functions $(CF_2)_n$ or $(CF_2)_{n'}$,
• $Z^2$ is chosen from a single bond, an oxygen atom, a sulfur atom, a group -S(=O)-, a group $-S((=O)_2)-$ and a group -C(=O)-, and
• E is an aromatic group comprising from 5 to 20 carbon atoms; E comprising 1 or 2 aromatic rings.

**2.** The polymer electrolyte of claim 1, wherein the organic solvent is chosen from the group consisting of: ethylene carbonate (EC), propylene carbonate (PC), fluoroethylene carbonate (FEC), difluoroethylene carbonate ($F_2EC$), fluoropropylene carbonate, glymes, dinitriles, sulfones (linear and cyclic), sulfides, sulfites, vinylene carbonate (VC), propane sultone, propene sultone, adiponitrile, dimethylsulfoxide (DMSO) and mixtures thereof.

**3.** The polymer electrolyte of claim 1 or 2, wherein the organic solvent is chosen from the group consisting of: ethylene carbonate, propylene carbonate, adiponitrile, and mixtures thereof.

**4.** The polymer electrolyte of any one of claims 1 to 3, wherein the aromatic ionomer comprises at least one ionic repeating unit UI1 having the formula (I) wherein $A^-$ is a sulfonimide anion of formula $-SO_2-N^--SO_2R$, R being as defined in claim 1, and being preferably a $-CF_3$ group.

**5.** The polymer electrolyte of any one of claims 1 to 4, wherein the aromatic ionomer is a multi-block copolymer of the following formula:

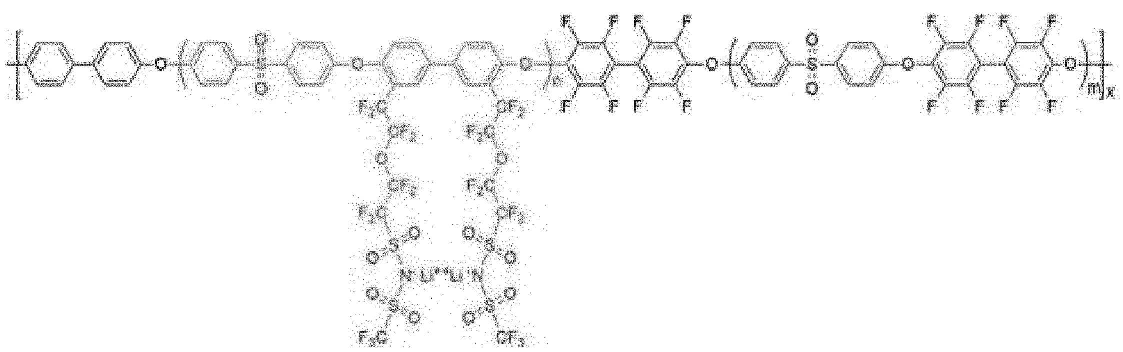

wherein:

- n is comprised between 8 and 50;
- m is comprised between 4 and 50; and

- x is comprised between 2 and 12.

6. The polymer electrolyte of any one of claims 1 to 5, wherein the aromatic ionomer comprises between 1 and 6, preferably between 2 and 4, ionic functions per repeating units UI1 as defined in claim 1.

7. The polymer electrolyte of any one of claims 1 to 6, wherein the weight amount of organic solvent(s) is comprised between 10% and 75%, preferably between 30% and 70%, and more preferably between 45% and 65%, in relation to the total weight of said electrolyte.

8. An electrode made of an active material selected from the group consisting of: metal oxides, metal fluorides, metal sulfides, metal nitrides, metal sulfates, metal vanadates, metal silicates and mixtures thereof, said metal comprising at least one transition metal, wherein said electrode also comprises the polymer electrolyte as defined in any one of claims 1 to 7.

9. A method for the preparation of the polymer electrolyte of any one of claims 1 to 7, comprising the following steps:

- the preparation of a dry ionomer film using a solvent-cast method, and
- the doping of said dry film with at least one organic solvent, in particular by immersing said dry film in at least one organic solvent.

10. The method of claim 9, wherein the dry ionomer film is obtained by a method comprising the following steps:

- preparation of a ionomer solution by mixing at least one ionomer in a casting solvent, said casting solvent being a block-copolymer selective solvent selected from the group consisting of: dimethylformamide, dimethylsulfoxide, N-methyl-pyrrolidone, sulfolane, ethylene carbonate, propylene carbonate, and mixtures thereof, preferably DMSO, or a non-selective solvent selected from the group consisting of: dimethylacetamide, acetone, diethylacetamine, mixture of acetone and chloroform, and mixtures thereof, preferably dimethylacetamide, and
- centrifugation and casting of said ionomer solution, and removal of the casting solvent.

11. A method for the preparation of the polymer electrolyte of any one of claims 1 to 7, comprising the drying of the ionomer under vacuum and the preparation of said electrolyte in a dry room, preferably with a relative humidity of less than 0.2% at 20°C, under vacuum.

12. A method for the preparation of the electrode of claim 8, comprising the application, in particular by extrusion or by hot pressing, onto a electrode, composed of the active material, and possibly a conductive additive, a polymer binder, and an electron conducting current collector, of a mixture comprising the aromatic ionomer and the organic solvent as defined in any one of claims 1 to 7, or comprising the application onto the electrode of the aromatic ionomer, followed by the application of the organic solvent.

13. A method for the preparation of the electrode of claim 8, comprising the application of the polymer electrolyte according to any one of claims 1 to 7, onto a cathode, and the hot pressing of said cathode and polymer electrolyte at a temperature between 40°C and 120°C for a time period between 2 minutes and 10 minutes, preferably at 80°C for 4-5 minutes.

14. The use of the polymer electrolyte of any one of claims 1 to 7, as a polymer electrolyte membrane in batteries, such as magnesium(-ion), sodium(-ion) lithium(-ion) or lithium-ion polymer batteries.

15. The use of the electrode of claim 8, as a positive or negative electrode in batteries, such as magnesium(-ion), sodium(-ion), lithium(-ion) or lithium-ion polymer batteries.

16. A battery, such as magnesium(-ion), sodium(-ion), or lithium(-ion) battery or lithium-ion polymer, comprising at least one polymer electrolyte of any one of claims 1 to 7, and optionally the electrode of claim 8 as a positive or negative electrode.

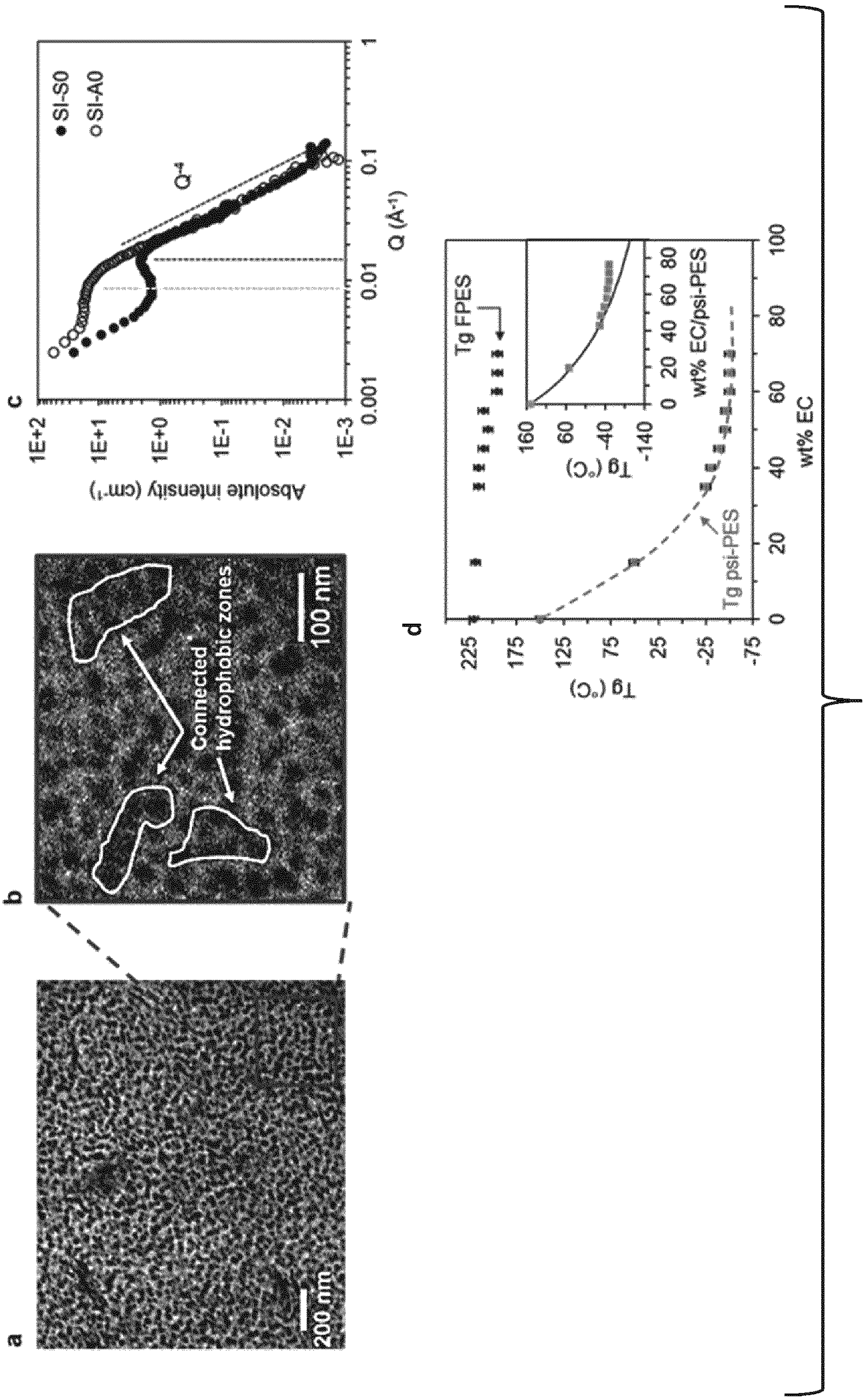
a
200 nm
b
Connected hydrophobic zones.
100 nm
c
Absolute intensity (cm⁻¹)
1E+2
1E+1
1E+0
1E-1
1E-2
1E-3
0.001
0.01
0.1
1
Q (Å⁻¹)
Q⁻⁴
SI-S0
SI-A0
d
Tg (°C)
225
175
125
75
25
-25
-75
0
20
40
60
80
100
wt% EC
Tg FPES
Tg psi-PES
160
60
-40
-140
wt% EC/psi-PES

FIG.1

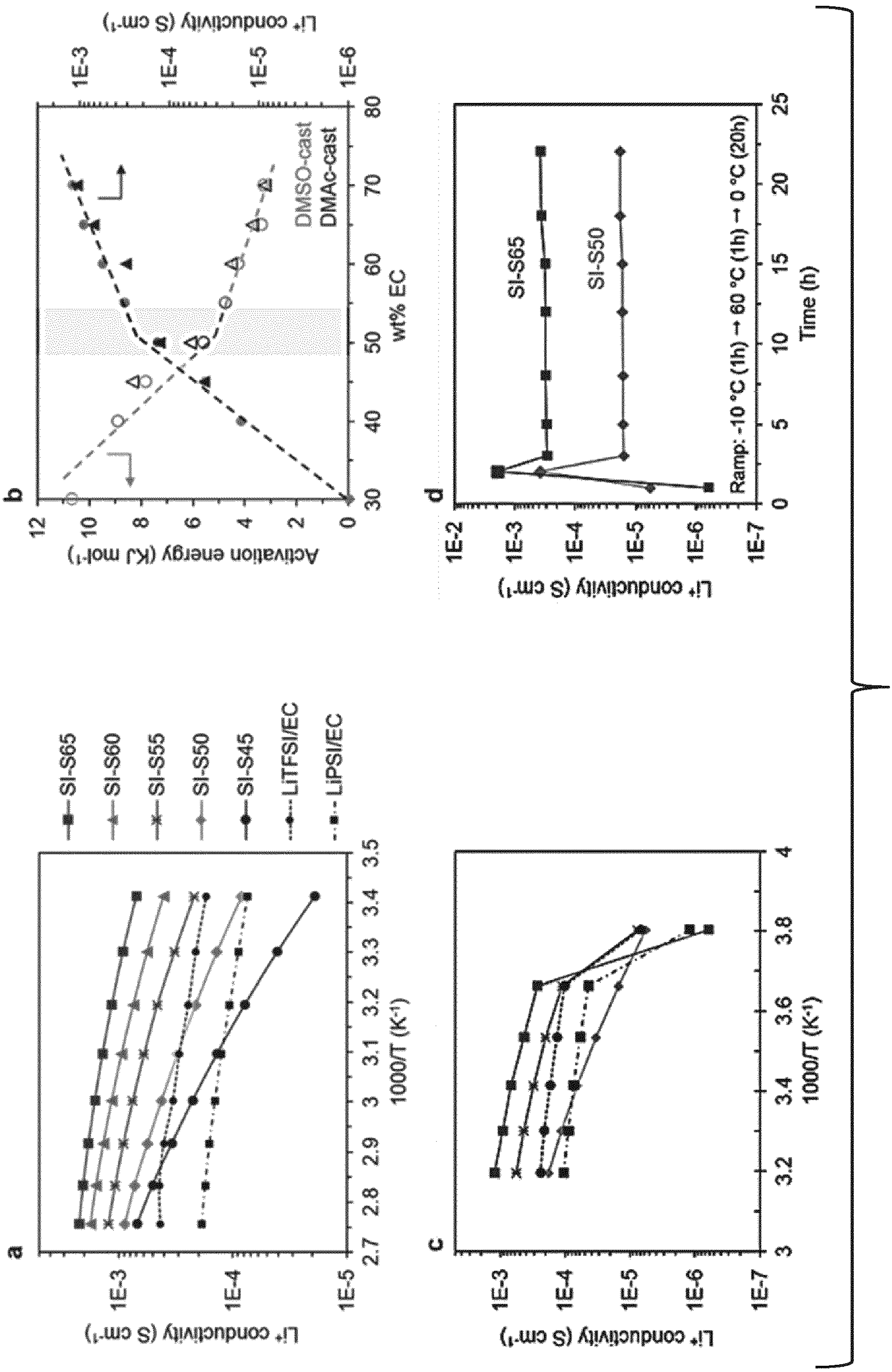
a
b
c
d
SI-S65
SI-S60
SI-S55
SI-S50
SI-S45
LiTFSI/EC
LiPSI/EC
1000/T (K-1)
Li+ conductivity (S cm-1)
Activation energy (KJ mol-1)
wt% EC
DMSO-cast
DMAc-cast
Time (h)
Ramp: -10 °C (1h) → 60 °C (1h) → 0 °C (20h)

FIG.2

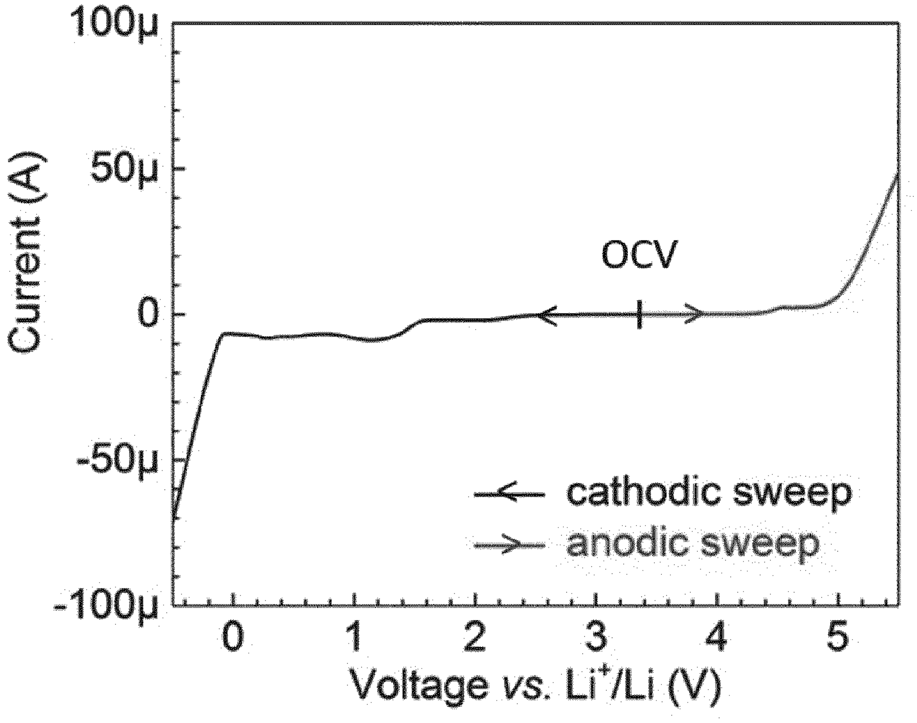
100µ
50µ
0
-50µ
-100µ
Current (A)
OCV
cathodic sweep
anodic sweep
0
1
2
3
4
5
Voltage vs. Li+/Li (V)

FIG.3

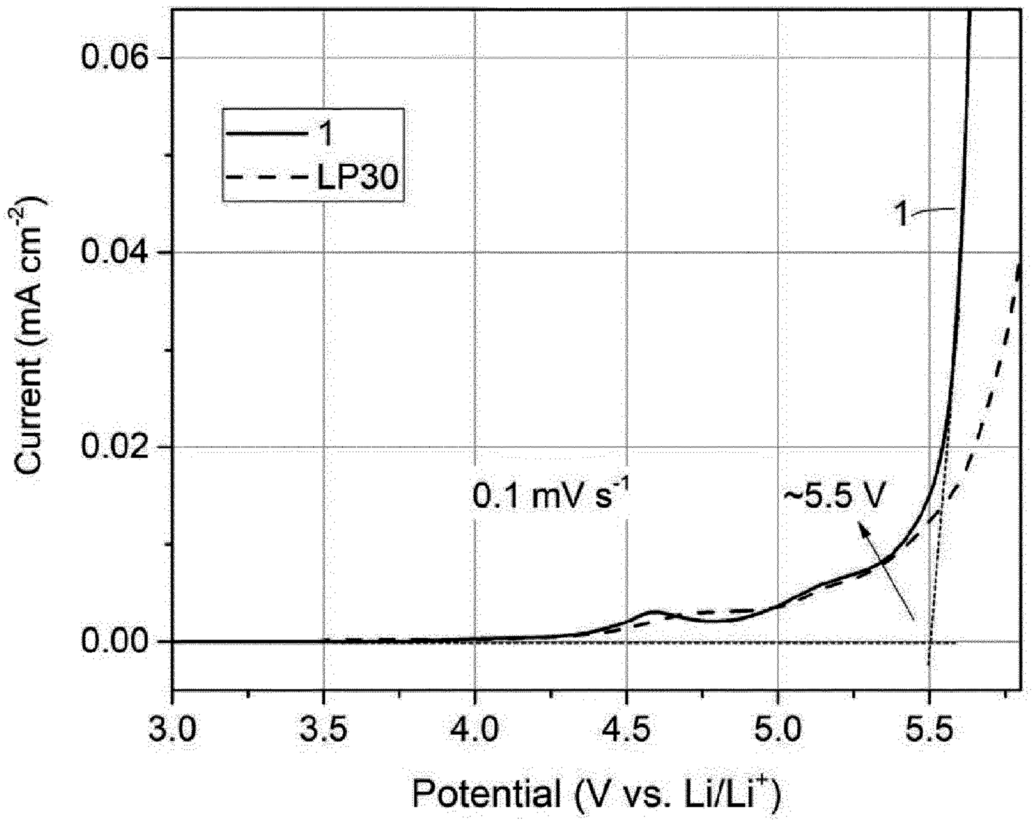
1
LP30
0.06
0.04
0.02
0.00
Current (mA cm-2)
1
0.1 mV s-1
~5.5 V
3.0
3.5
4.0
4.5
5.0
5.5
Potential (V vs. Li/Li+)

FIG.4

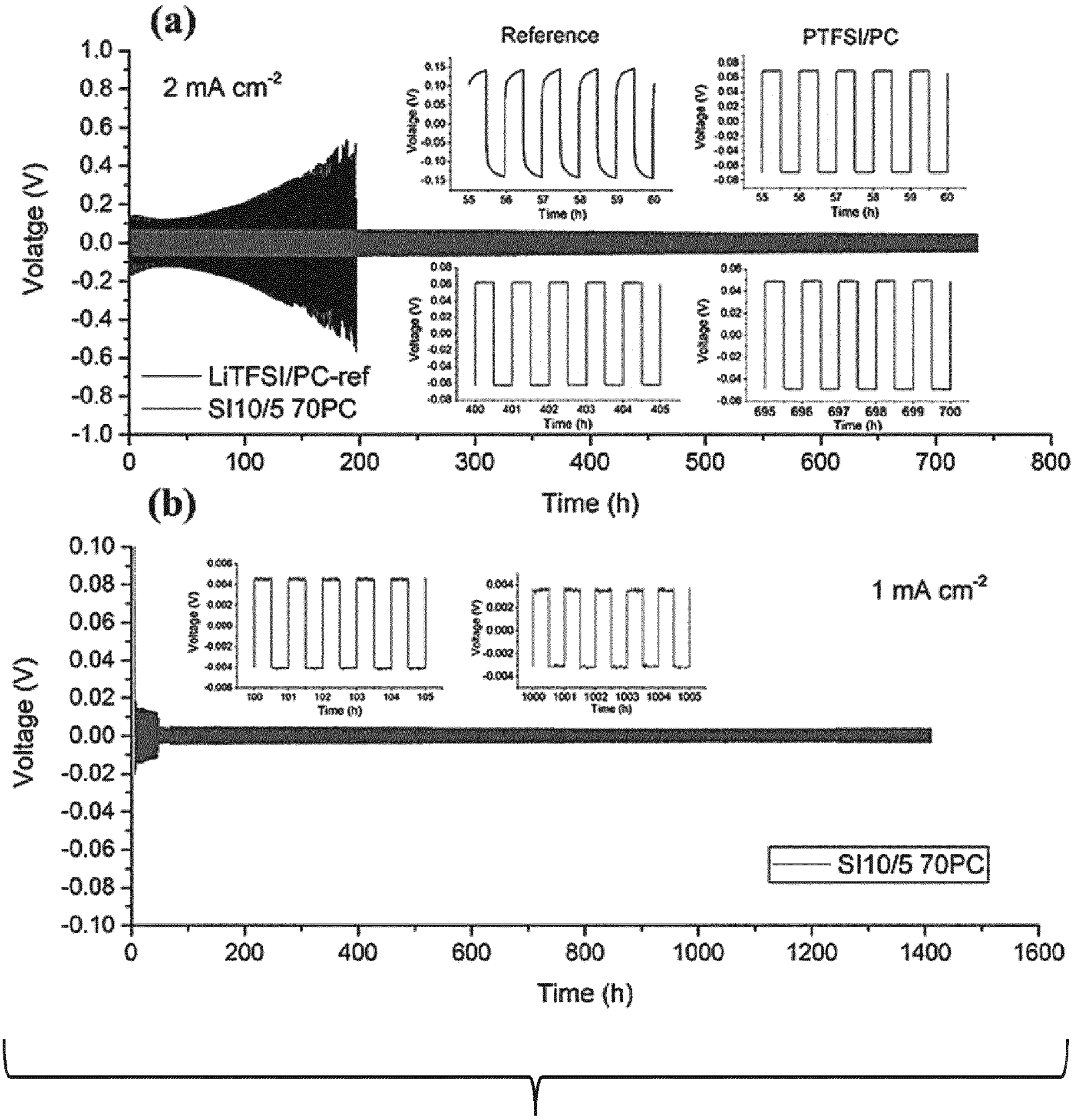
(a)
2 mA cm-2
Reference
PTFSI/PC
Volatge (V)
Time (h)
LiTFSI/PC-ref
SI10/5 70PC
(b)
1 mA cm-2
Voltage (V)
Time (h)
SI10/5 70PC

FIG.5

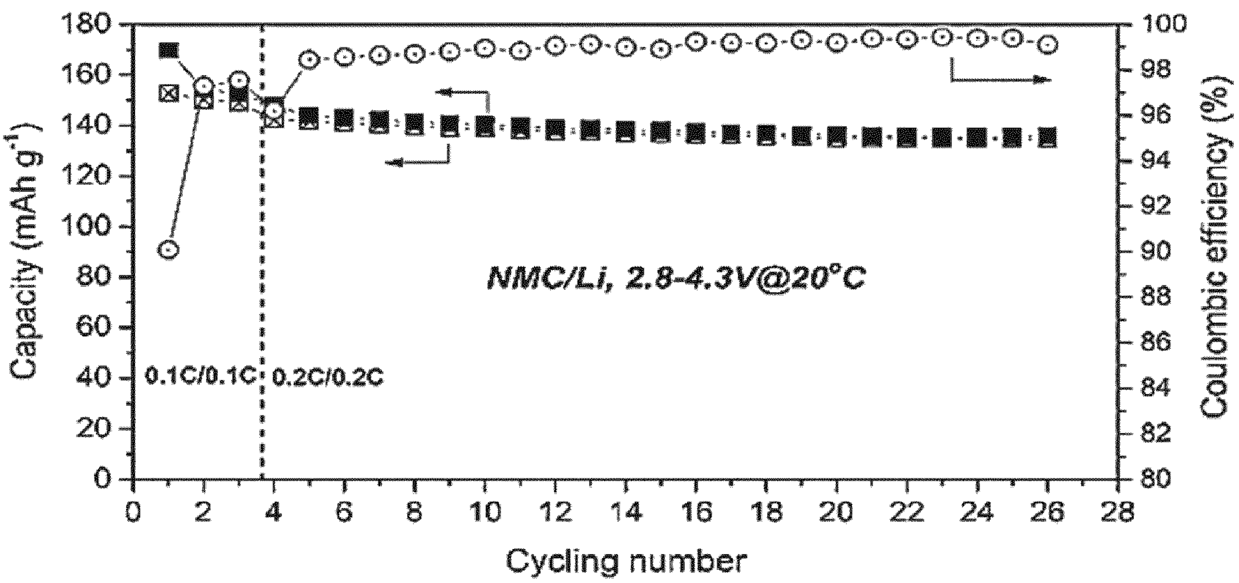
Capacity (mAh g-1)
Coulombic efficiency (%)
Cycling number
NMC/Li, 2.8-4.3V@20°C
0.1C/0.1C
0.2C/0.2C

FIG.6

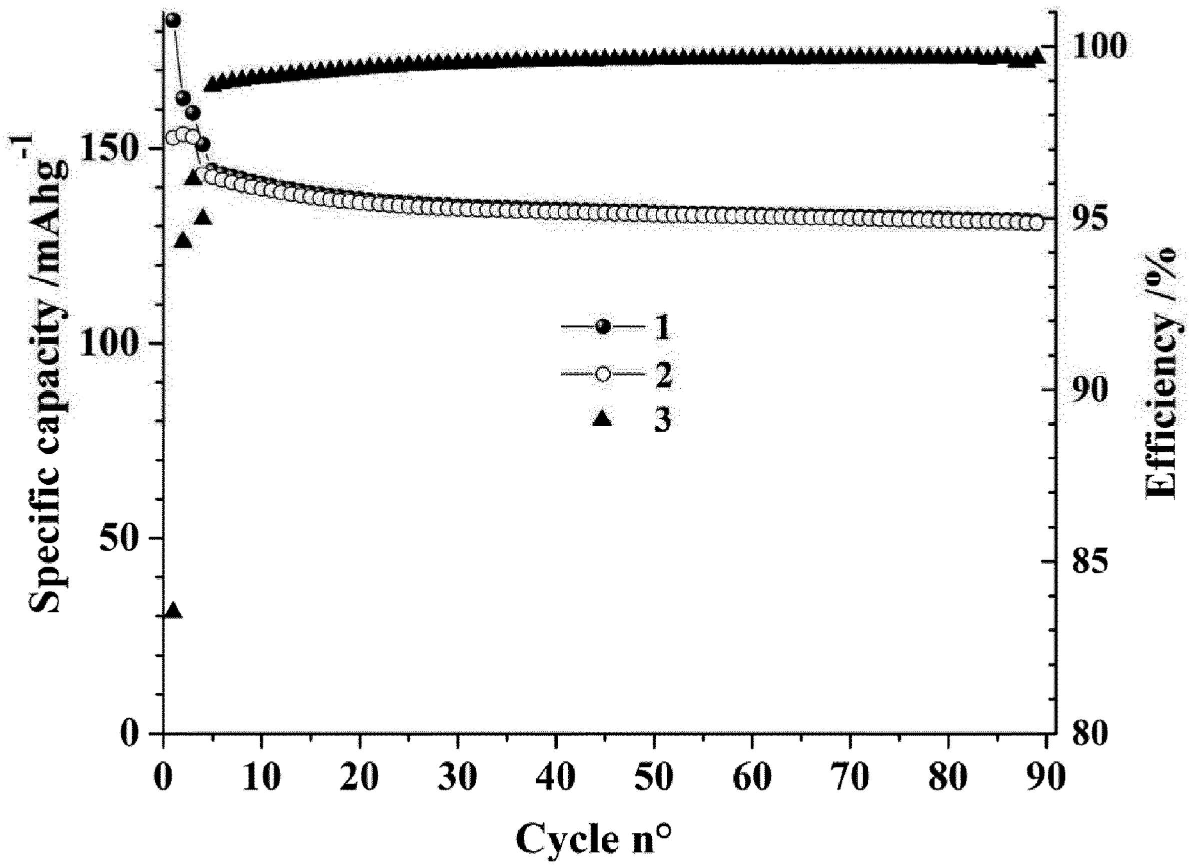
Specific capacity /mAhg-1
Efficiency /%
Cycle n°
1
2
3

FIG.7

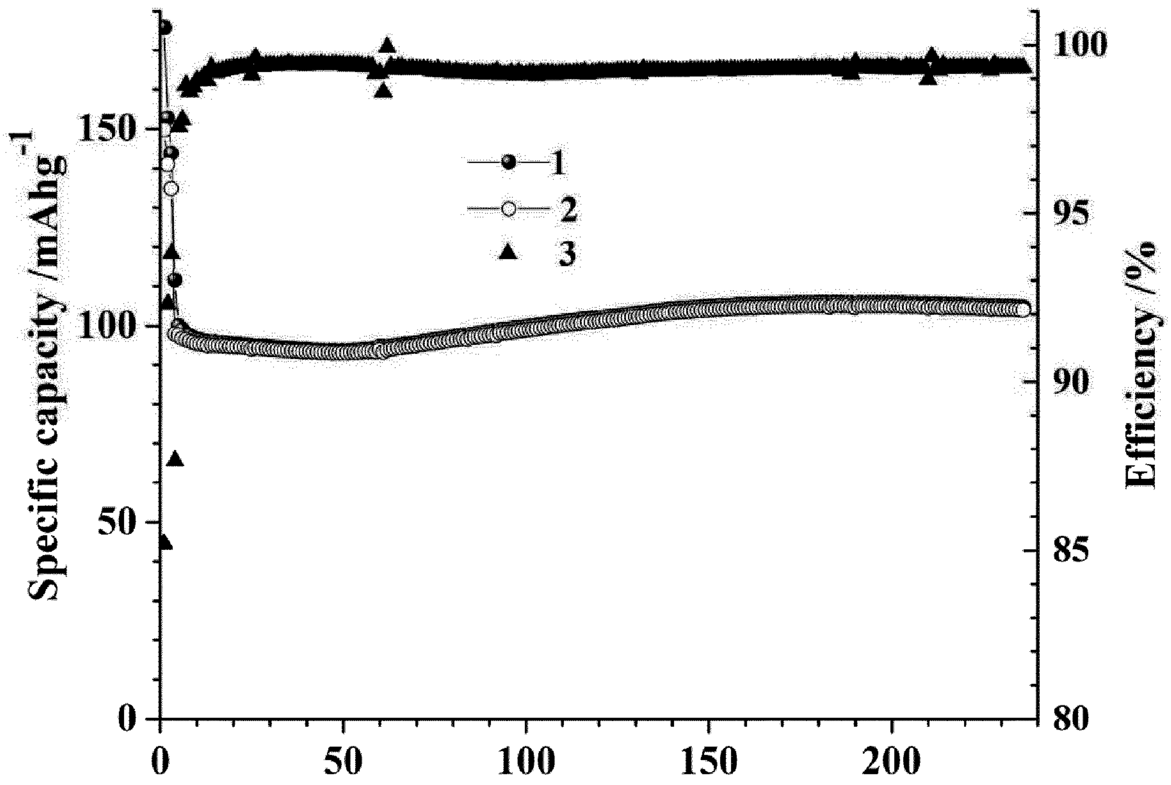
Specific capacity /mAhg-1
Efficiency /%
Cycle n°
1
2
3
0
50
100
150
200
80
85
90
95
100

FIG.8

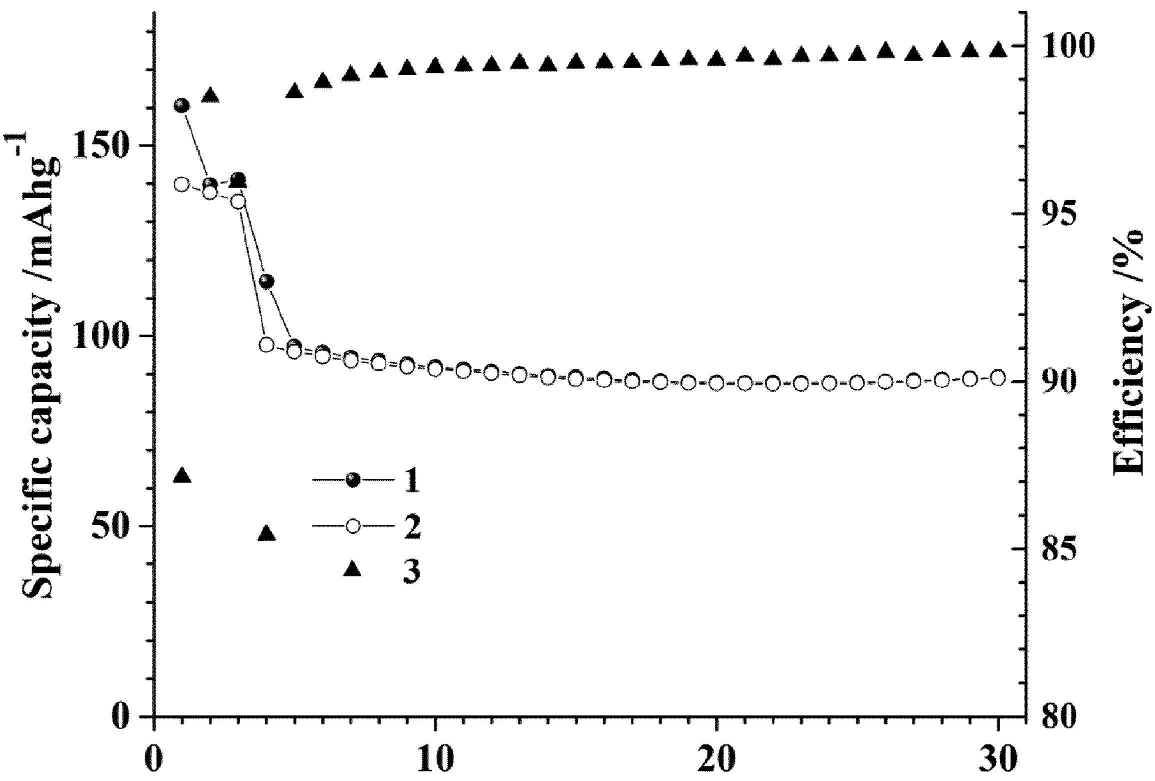
Specific capacity /mAhg-1
Efficiency /%
Cycle n°
1
2
3
0
10
20
30
50
100
150
80
85
90
95
100

FIG.9

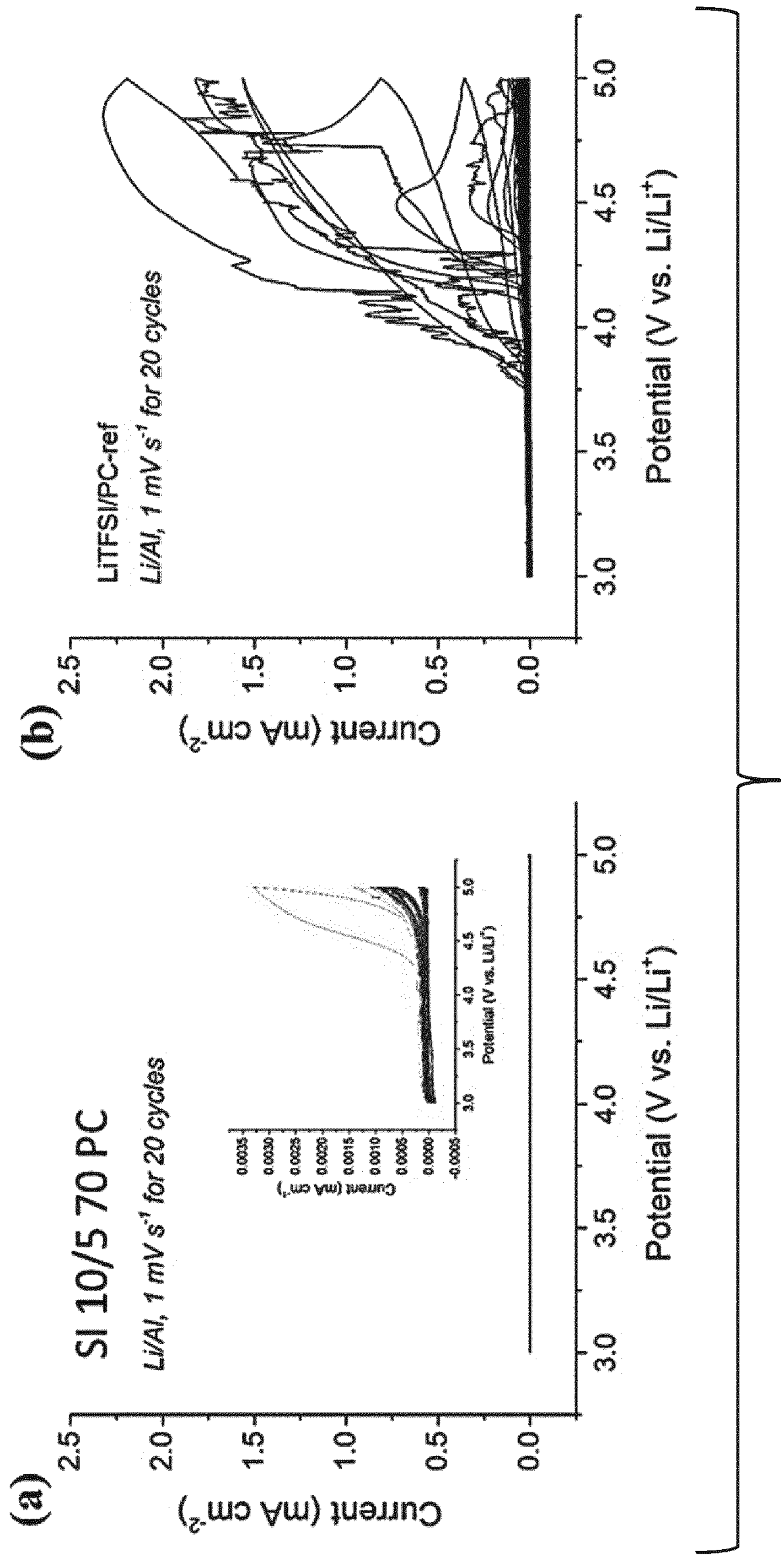
(a)
SI 10/5 70 PC
Li/Al, 1 mV s$^{-1}$ for 20 cycles
Current (mA cm$^{-2}$)
Potential (V vs. Li/Li$^{+}$)
(b)
LiTFSI/PC-ref
Li/Al, 1 mV s$^{-1}$ for 20 cycles
Current (mA cm$^{-2}$)
Potential (V vs. Li/Li$^{+}$)

FIG.10

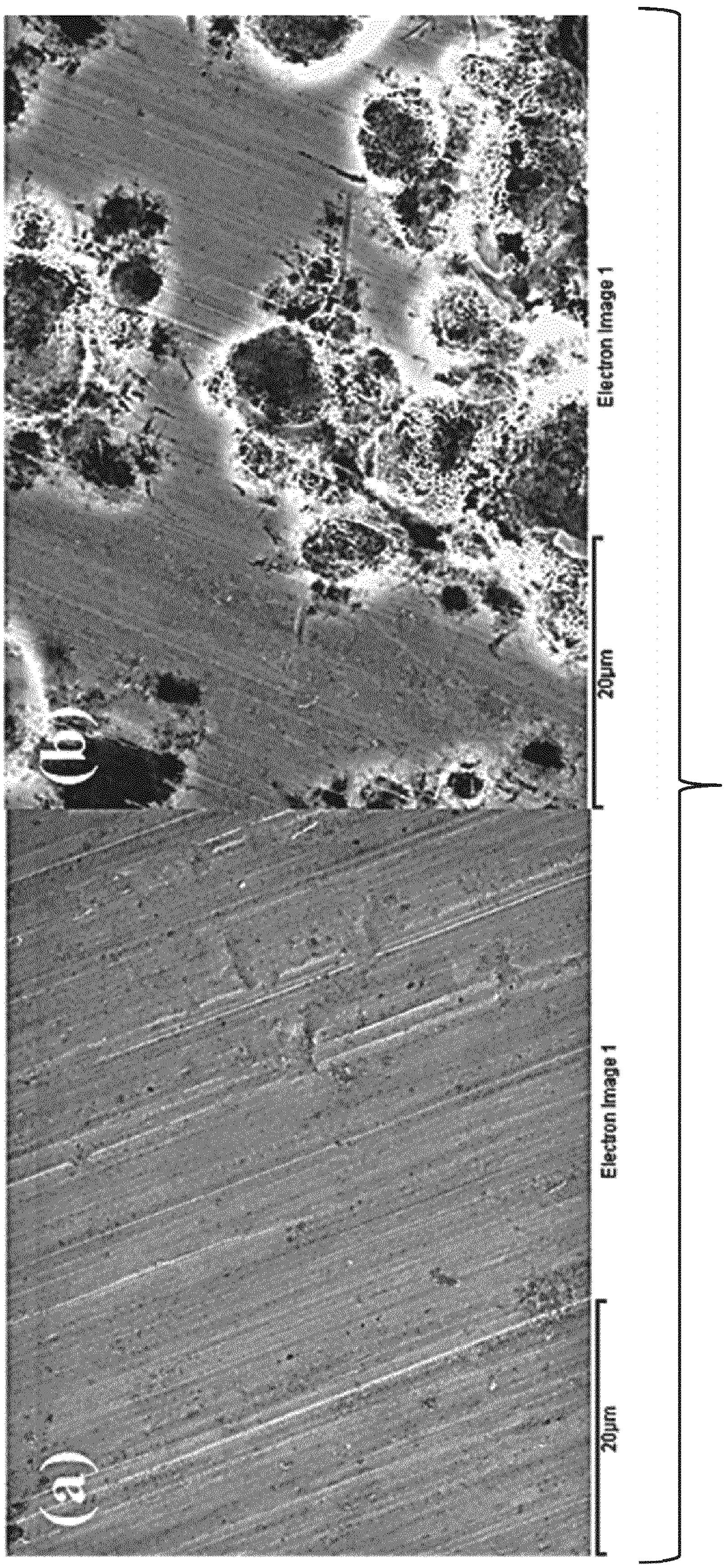


FIG.11

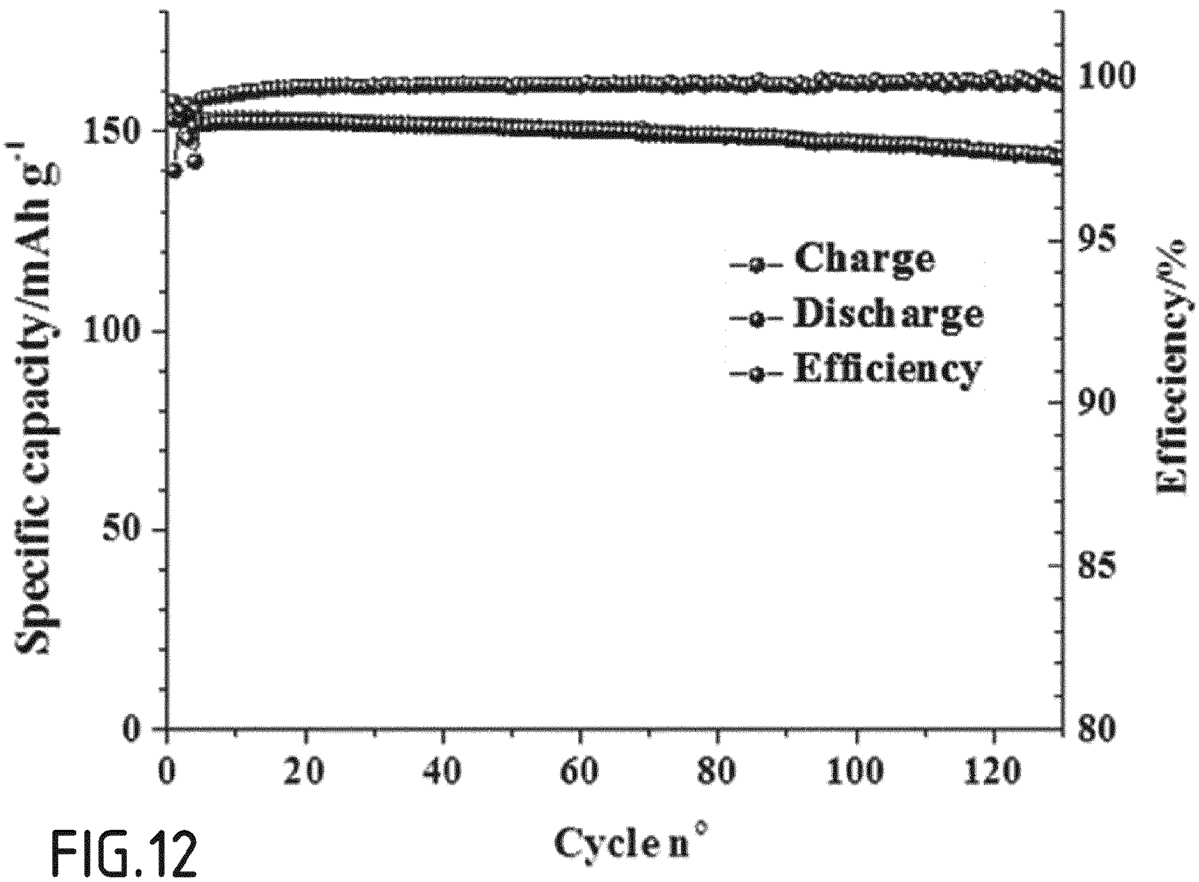
Specific capacity/mAh g-1
Efficiency/%
Charge
Discharge
Efficiency
Cycle n°
0
50
100
150
0
20
40
60
80
100
120
80
85
90
95
100

FIG.12

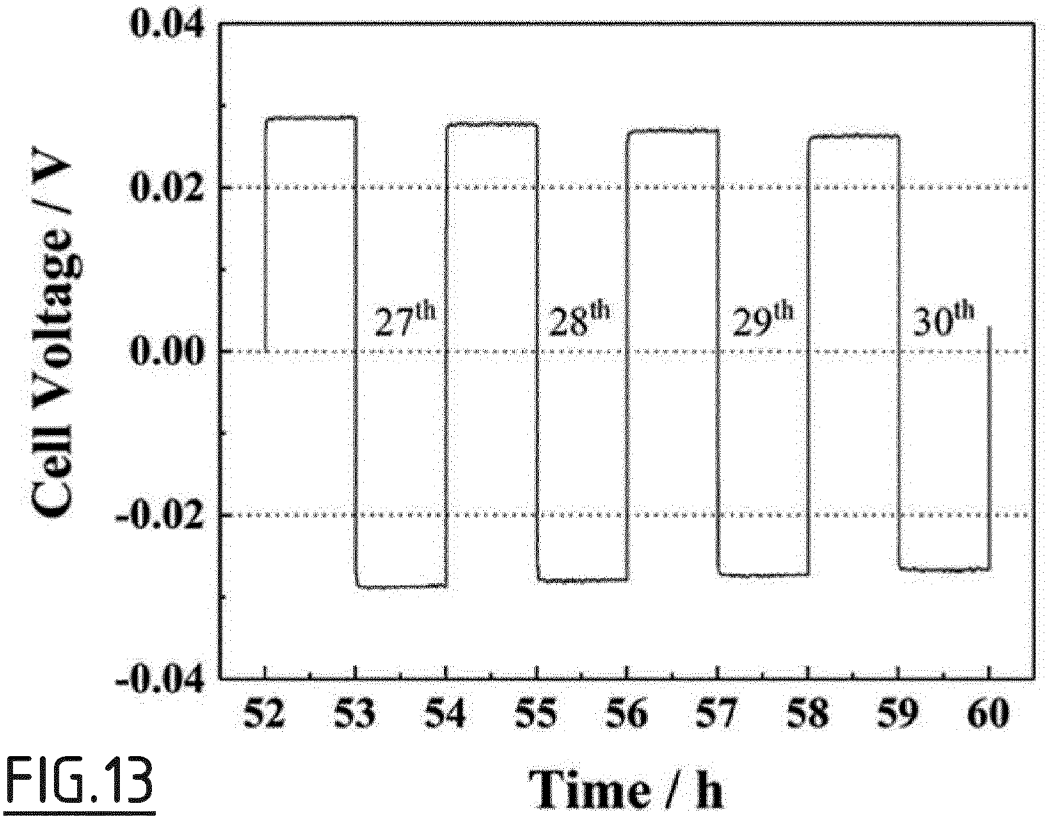
Cell Voltage / V
Time / h
0.04
0.02
0.00
-0.02
-0.04
27th
28th
29th
30th
52
53
54
55
56
57
58
59
60

FIG.13

Europäisches Patentamt
European Patent Office
Office européen des brevets

# EUROPEAN SEARCH REPORT

Application Number
EP 18 30 5782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Huu-Dat Nguyen: "Nanostructured Aromatic Polymer Electrolytes for PEMFC: Structure-Morphology- Property Interplay", , 11 May 2017 (2017-05-11), XP055504087, Retrieved from the Internet: URL:https://www.theses.fr/2017GREAI014.pdf [retrieved on 2018-09-04] * pages 169-174 * * page 205 * ----- | 1-16 | INV. H01M6/18 B01D71/66 |
| A | WO 99/67304 A1 (DU PONT [US]; DOYLE CHRISTOPHER MARC [US]; FIERING ANDREW EDWARD [US];) 29 December 1999 (1999-12-29) * page 12, line 9 - page 14, line 24 * ----- | 12-14 | |
| A | WO 00/52085 A1 (DU PONT [US]) 8 September 2000 (2000-09-08) * page 1, line 12 - page 2, line 15 * * page 3, line 20 - page 4, line 12 * * page 10, lines 5-24 * ----- | 12,13 | |

TECHNICAL FIELDS SEARCHED (IPC)
H01M
B01D

The present search report has been drawn up for all claims

1

| Place of search | Date of completion of the search | Examiner |
|---|---|---|
| Munich | 4 September 2018 | Hoyal, Barnaby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 30 5782

This annex lists the patent family members relating to the patent documents cited in the above-mentioned European search report. The members are as contained in the European Patent Office EDP file on
The European Patent Office is in no way liable for these particulars which are merely given for the purpose of information.

04-09-2018

| Patent document cited in search report | Publication date | Patent family member(s) | Publication date |
|---|---|---|---|
| WO 9967304 A1 | 29-12-1999 | AU 752929 B2 | 03-10-2002 |
| | | CA 2330792 A1 | 29-12-1999 |
| | | CN 1307599 A | 08-08-2001 |
| | | DE 69918117 D1 | 22-07-2004 |
| | | DE 69918117 T2 | 30-06-2005 |
| | | EP 1095071 A1 | 02-05-2001 |
| | | JP 2003525957 A | 02-09-2003 |
| | | WO 9967304 A1 | 29-12-1999 |
| WO 0052085 A1 | 08-09-2000 | AT 229551 T | 15-12-2002 |
| | | AU 3392200 A | 21-09-2000 |
| | | AU 3615500 A | 21-09-2000 |
| | | CA 2362296 A1 | 08-09-2000 |
| | | CN 1359404 A | 17-07-2002 |
| | | DE 60000974 D1 | 23-01-2003 |
| | | DE 60000974 T2 | 04-09-2003 |
| | | EP 1157061 A1 | 28-11-2001 |
| | | JP 2002538252 A | 12-11-2002 |
| | | KR 20010104365 A | 24-11-2001 |
| | | MX PA01008839 A | 14-05-2002 |
| | | TW 568928 B | 01-01-2004 |
| | | WO 0051806 A2 | 08-09-2000 |
| | | WO 0052085 A1 | 08-09-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HALLINAN, D. T. ; BALSARA, N. P.** Polymer Electrolytes. *Annu. Rev. Mater. Res.,* 2013, vol. 43, 503-525
- **ASSUMMA, L.** Synthesis of Partially Fluorinated Poly(Arylene Ether Sulfone) Multiblock Copolymers Bearing Perfluorosulfonic Functions. *J. Polym. Sci. Part A Polym. Chem.,* 2015, vol. 53, 1941-1956
- **CAI, Z.** High performance of lithium-ion polymer battery based on non-aqueous lithiated perfluorinated sulfonic ion-exchange membranes. *Energy Environ. Sci.,* 2012, vol. 5, 5690-5693
- **JIN, Z. ; XIE, K. ; HONG, X.** Synthesis and electrochemical properties of a perfluorinated ionomer with lithium sulfonyl dicyanomethide functional groups. *J. Mater. Chem. A,* 2013, 342-347